# FASCICULE DE BREVET EUROPEEN

(11) **EP 2 197 792 B1**
(45) Date de publication et mention de la délivrance du brevet: **25.01.2012**
(21) Numéro de dépôt: 08847212.1
(22) Date de dépôt: 29.08.2008
(51) Int. Cl.: C01B 37/00, C01B 37/02, C01B 39/00

(54) **MATERIAU CRISTALLISE COMPRENANT DU SILICIUM A POROSITE HIERARCHISEE ET ORGANISEE**
KRISTALLISIERTES MATERIAL MIT SILICIUM VON HIERARCHISIERTER UND ORGANISIERTER POROSITÄT
CRYSTALLISED MATERIAL CONTAINING SILICON WITH HIERARCHISED AND ORGANISED POROSITY

(30) Priorité: 07.09.2007 FR 0706294
(43) Date de publication de la demande: 23.06.2010
(73) Titulaire: IFP Energies nouvelles, 92852 Rueil-Malmaison Cedex (FR)
(72) Inventeur: CHAUMONNOT, Alexandra, 69008 Lyon (FR); PEGA, Stéphanie, 93600 Aulnay sous Bois (FR); SANCHEZ, Clément, 91190 Gif-sur-Yvette (FR); BOISSIERE, Cédric, 75013 Paris (FR)
(86) Numéro de dépôt international: PCT/FR2008/001216
(87) Numéro de publication internationale: WO 2009/060144

(56) Documents cités:
- EP-A- 1 627 852
- EP-A- 1 627 853
- WO-A-2006/128989
- VERHOEF M J ET AL: "PARTIAL TRANSFORMATION OF MCM-41 MATERIAL INTO ZEOLITES: FORMATION OF NANOSIZED MFI TYPE CRYSTALLITES" CHEMISTRY OF MATERIALS, AMERICAN CHEMICAL SOCIETY, WASHINGTON, US, vol. 13, no. 2, 1 février 2001 (2001-02-01), pages 683-687, XP001005184 ISSN: 0897-4756 cité dans la demande

## Description

La présente invention se rapporte au domaine des matériaux comprenant du silicium, notamment des matériaux métallosilicates et plus précisément des matériaux aluminosilicates, présentant une porosité hiérarchisée et organisée dans les domaines de la microporosité et de la mésoporosité. Elle concerne également la préparation de ces matériaux qui sont obtenus par l'emploi de la technique de synthèse dite "aérosol".

### Etat de la technique antérieure

Les nouvelles stratégies de synthèse permettant d'obtenir des matériaux à porosité bien définie dans une très large gamme, allant des matériaux microporeux aux matériaux macroporeux en passant par des matériaux à porosité hiérarchisée, c'est-à-dire ayant des pores de plusieurs tailles, connaissent un très large développement au sein de la communauté scientifique depuis le milieu des années 90 (G. J. de A. A. Soler-Illia, C. Sanchez, B. Lebeau, J. Patarin, Chem. Rev., 2002, 102, 4093). En particulier, de nombreux travaux portent sur le développement de matériaux présentant une microporosité de nature zéolithique et une mésoporosité de façon à bénéficier simultanément des propriétés catalytiques propres aux zéolithes et des propriétés catalytiques et surtout texturales de la phase mésoporeuse.

Une technique fréquemment employée pour générer des matériaux présentant cette bi-porosité consiste à créer directement au sein de cristaux de zéolithe des mésopores en faisant subir à cette dernière un traitement hydrothermal sous vapeur d'eau encore appelé "steaming". Sous l'effet de ce traitement, la mobilité des atomes tétraédriques qui composent la charpente de la zéolithe est accrue au point que certains de ces atomes sont extraits du réseau, ce qui engendre la formation de zones amorphes, qui peuvent être dégagées pour laisser la place à des cavités mésoporeuses (A. H. Jansen, A. J. Koster, K. P. De Jong, J. Phys. Chem. B, 2002, 106, 11905). La formation de telles cavités peut aussi être obtenue par traitement acide de la zéolithe (H. Ajot, J. F. Joly, J. Lynch, F. Raatz, P. Caullet, Stud. Surf. Sci. Catal., 1991, 62, 583). Ces méthodes présentent toutefois l'inconvénient de rendre partiellement amorphe une partie de la zéolithe et de modifier ses propriétés par variation de la composition chimique. Dans tous les cas, la mésoporosité ainsi introduite permet d'éliminer ou tout du moins de limiter les problèmes de limitations diffusionnelles rencontrés dans des matériaux microporeux, les mésopores présentant des facteurs de diffusion bien plus importants que les micropores et permettant ainsi l'accès aux sites actifs de la zéolithe (P. B. Weisz, Chemtech, 1973, 3, 498).

Plus récemment, de nombreux travaux ont porté sur l'élaboration de matériaux mixtes mésostructuré/zéolithe, les matériaux mésostructurés présentant l'avantage supplémentaire d'avoir une porosité parfaitement organisée et calibrée dans la gamme des mésopores.

Nous rappelons ici brièvement que les matériaux mésostructurés sont classiquement obtenus via des méthodes de synthèse dites de chimie douce qui consistent à mettre en présence en solution aqueuse ou dans des solvants polaires de précurseurs inorganiques avec des agents structurants, généralement des tensioactifs moléculaires ou macromoléculaires, ioniques ou neutres. Le contrôle des interactions électrostatiques ou par liaisons hydrogènes entre les précurseurs inorganiques et l'agent structurant conjointement lié à des réactions d'hydrolyse/condensation du précurseur inorganique conduit à un assemblage coopératif des phases organique et inorganique générant des agrégats micellaires de tensioactifs de taille uniforme et contrôlée au sein d'une matrice inorganique. La libération de la porosité est ensuite obtenue par élimination du tensioactif, celle-ci étant réalisée classiquement par des procédés d'extraction chimique ou par traitement thermique. En fonction de la nature des précurseurs inorganiques et de l'agent structurant employé ainsi que des conditions opératoires imposées, plusieurs familles de matériaux mésostructurés ont été développées comme la famille des M41 S obtenue via l'emploi de sels d'ammonium quaternaire à longue chaîne comme agent structurant (J. S. Beck, J. C. Vartuli, W. J. Roth, M. E. Leonowicz, C. T. Kresge, K. D. Schmitt, C. T.-W. Chu, D. H. Olson, E. W. Sheppard, S. B. McCullen, J. B. Higgins, J. L. Schlenker, J. Am. Chem. Soc., 1992, 114, 27, 10834) ou bien la famille des SBA obtenue via l'emploi de copolymères triblocs comme agents structurants (D. Zhao, J. Feng, Q. Huo, N. Melosh, G. H. Fredickson, B. F. Chmelka, G. D. Stucky, Science, 1998, 279, 548).

Plusieurs techniques de synthèse permettant l'élaboration de ces matériaux mixtes mésostructuré/zéolithe ont ainsi été répertoriées dans la littérature ouverte. Une première technique de synthèse consiste à synthétiser en première étape un matériau aluminosilicate mésostructuré selon les méthodes classiques explicitées ci-dessus puis, en deuxième étape, à imprégner ce matériau avec un agent structurant habituellement utilisé dans la synthèse de matériaux zéolithiques. Un traitement hydrothermique adapté conduit à une zéolithisation des parois (ou murs) amorphes de l'aluminosilicate mésostructuré de départ (K. R. Koletstra, H. van Bekkum, J. C. Jansen, Chem. Commun., 1997, 2281 ; D. T. On, S. Kaliaguine, Angew. Chem. Int. Ed., 2001, 40, 3248 ; D. T. On, D. Lutic, S. Kaliaguine, Micropor. Mesopor. Mater., 2001, 44, 435 ; M. J. Verhoef, P. J. Kooyman, J. C. van der Waal, M. S. Rigutto, J. A. Peters, H. van Bekkum, Chem. Mater., 2001, 13, 683 ; S. Kaliaguine, D. T. On, US6669924B1, 2003). Une deuxième technique de synthèse consiste cette fois-ci à mettre en présence une solution colloïdale de germes de zéolithes (appelés aussi entités protozéolithiques) avec un tensioactif habituellement utilisé pour créer une mésostructuration du matériau final. L'idée mise à profit ici est de générer simultanément l'élaboration d'une matrice inorganique à mésoporosité organisée et la croissance au sein de cette matrice des germes de zéolithes de façon à obtenir idéalement un matériau aluminosilicate mésostructuré présentant des parois (ou murs) cristallisées (Z. Zhang et al, J. Am. Chem. Soc., 2001, 123, 5014 ; Y. Liu et al, J. Am. Chem., Soc., 2000, 122, 8791). Une variante à ces deux techniques consiste à partir d'un mélange de précurseurs d'aluminium et de silicium en présence de deux agents structurants, l'un susceptible de générer un système zéolithique, l'autre susceptible de générer une mésostructuration. Cette solution est ensuite soumise à deux étapes de cristallisation à l'aide de conditions de traitement hydrothermal variables, une première étape qui conduit à la formation de la structure mésoporeuse à porosité organisée et une deuxième étape qui conduit à la zéolithisation des parois (ou murs) amorphes (A. Karlsson, M. Stöcker, R. Schmidt, Micropor. Mesopor. Mater., 1999, 27, 181 ; L. Huang, W. Guo, P. Deng, Z. Xue, Q. Li, J. Phys., Chem. B, 2000, 104, 2817). L'ensemble de ces méthodes de synthèse présente l'inconvénient d'endommager la mésostructure et donc de perdre les avantages de celle-ci dans le cas où la croissance des germes de zéolithes ou la zéolithisation des parois n'est pas parfaitement maîtrisée, ce qui rend ces techniques délicates à mettre en oeuvre.

Nous notons qu'il est également possible d'élaborer directement des matériaux composites mésostructuré/zéolithe de façon à bénéficier des propriétés catalytiques propres à chacune de ces phases. Ceci peut se faire par traitement thermique d'un mélange d'une solution de germes de zéolithes et d'une solution de germes d'aluminosilicates mésostructurés (P. Prokesova, S. Mintova, J. Cejka, T. Bein, Micropor. Mesopor. Mater., 2003, 64, 165) ou bien par croissance d'une couche de zéolithe à la surface d'un aluminosilicate mésostructuré pré-synthétisé (D. T. On, S. Kaliaguine, Angew. Chem. Int. Ed., 2002, 41, 1036).

En excluant les matériaux zéolithiques mésoporeux obtenus par post-traitement d'une zéolithe, nous notons que, d'un point de vue expérimental, tous ces matériaux sont obtenus par précipitation directe de précurseurs inorganiques en présence ou non d'agents structurants au sein d'une solution aqueuse ou dans des solvants polaires, cette étape étant la plupart du temps suivie par une ou plusieurs étapes de mûrissement en autoclave. Les particules élémentaires habituellement obtenues ne présentent pas de forme régulière et sont caractérisées par une taille variant de 200 à 500 nm et souvent bien supérieure à 500 nm.

Dans le cas des matériaux mésostructurés non zéolithiques, il est possible de réaliser l'auto-assemblage coopératif de l'agent structurant avec les précurseurs inorganiques hydrolysés et condensés à divers degrés d'avancement par évaporation progressive d'une solution de ces réactifs dont la concentration en agent structurant est inférieure à la concentration micellaire critique (C_{mc}) bien connue de l'Homme du métier, ce qui conduit soit à la formation de films mésostructurés dans le cas d'un dépôt sur substrat (technique "dip-coating"), soit à la formation d'une poudre mésostructurée après atomisation de la solution (technique aérosol). A titre d'exemple, le brevet US 6387453 divulgue la formation de films hybrides organiques-inorganiques mésostructurés par la technique de "dip-coating", ces mêmes auteurs ayant par ailleurs utilisé la technique aérosol pour élaborer des matériaux purement siliciques mésostructurés (C. J. Brinker, Y. Lu, A. Sellinger, H. Fan, Adv. Mater., 1999, 11, 7).

Le document EP1627853 décrit un matériau à porosité hiérarchisée constitué d'au moins deux particules sphériques élémentaires, chacune desdites particules sphériques comprenant des nanocristaux zéolithiques ayant une taille de pores comprise entre 0,2 et 2 nm et une matrice à base d'oxyde de silicium, mésostructurée, ayant une taille de pores comprise entre 1,5 et 30 nm et présentant des parois amorphes d'épaisseur comprise entre 1 et 20 nm, lesdites particules sphériques élémentaires ayant un diamètre maximal de 10 microns.

### Résumé de l'invention

L'invention concerne un matériau cristallisé à porosité hiérarchisée et organisée dans les domaines de la microporosité et de la mésoporosité constitué d'au moins deux particules sphériques élémentaires, chacune desdites particules comprenant une matrice à base d'oxyde de silicium, mésostructurée, ayant une taille de mésopores comprise entre 1,5 et 30 nm et présentant des parois microporeuses et cristallisées d'épaisseur comprise entre 1 et 60 nm, lesquelles sont constituées d'entités zéolithiques à l'origine de la microporosité du matériau, lesdites particules sphériques élémentaires ayant un diamètre maximal de 200 microns. Ladite matrice à base d'oxyde de silicium comprend éventuellement, en outre, au moins un élément X choisi parmi l'aluminium, le fer, le bore, l'indium et le gallium, de préférence l'aluminium. La présente invention concerne également la préparation du matériau selon l'invention.

Un premier procédé de préparation du matériau selon l'invention comprend les étapes : a) la préparation d'une solution limpide contenant les éléments précurseurs d'entités zéolithiques, à savoir au moins un agent structurant, au moins un précurseur silicique et éventuellement au moins un précurseur d'au moins un élément X choisi parmi l'aluminium, le fer, le bore, l'indium et le gallium ; b) le mélange en solution d'au moins un tensioactif et d'au moins ladite solution limpide obtenue selon a) tel que le rapport des volumes de matières inorganique et organique V_{inorganique}/V_{organique} soit compris entre 0,26 et 4 ; c) l'atomisation par aérosol de ladite solution obtenue à l'étape b) pour conduire à la formation de gouttelettes sphériques ; d) le séchage desdites gouttelettes ; e) l'autoclavage des particules obtenues selon d) ; f) le séchage desdites particules obtenues selon e) et g) l'élimination dudit agent structurant et dudit tensioactif pour l'obtention d'un matériau cristallisé à porosité hiérarchisée et organisée dans les domaines de la microporosité et de la mésoporosité.

Un deuxième procédé de préparation du matériau selon l'invention comprend les étapes : a') la préparation, à partir d'au moins un agent structurant, d'au moins un précurseur silicique et éventuellement d'au moins un précurseur d'au moins un élément X choisi parmi l'aluminium, le fer, le bore, l'indium et le gallium, d'une solution contenant des nanocristaux zéolithiques de taille nanométrique maximale égale à 60 nm afin d'obtenir une solution colloïdale dans laquelle sont dispersés lesdits nanocristaux ; b') le mélange en solution d'au moins un tensioactif et d'au moins ladite solution obtenue selon a') tel que le rapport des volumes de matières inorganique et organique V_{inorganique}/V_{organique} soit compris entre 0,26 et 4 ; c') l'atomisation par aérosol de ladite solution obtenue à l'étape b') pour conduire à la formation de gouttelettes sphériques ; d') le séchage desdites gouttelettes ; et g') l'élimination dudit agent structurant et dudit tensioactif pour l'obtention d'un matériau cristallisé à porosité hiérarchisée et organisée dans les domaines de la microporosité et de la mésoporosité. Selon une première variante dudit deuxième procédé de préparation selon l'invention, ladite étape d') est avantageusement suivie d'une étape e') consistant à pratiquer l'autoclavage des particules obtenues selon d') puis d'une étape f) consistant à procéder au séchage desdites particules obtenues selon e'), ladite étape f) étant ensuite suivie de ladite étape g'). Selon une deuxième variante dudit deuxième procédé de préparation du matériau selon l'invention, l'étape b') est mise en oeuvre en mélangeant en solution au moins un tensioactif, au moins ladite solution colloïdale obtenue selon l'étape a') et au moins une solution limpide contenant les éléments précurseurs d'entités zéolithiques, à savoir au moins un agent structurant, au moins un précurseur silicique et éventuellement au moins un précurseur d'au moins un élément X choisi parmi l'aluminium, le fer, le bore, l'indium et le gallium. Ledit mélange est réalisé dans des conditions telles que le rapport des volumes V_{inorganique}/V_{organique} de matières inorganique et organique engagées dans cette étape b') soit compris entre 0,26 et 4. Selon cette variante, l'étape d') dudit deuxième procédé de préparation du matériau selon l'invention est suivie d'une étape e') consistant à pratiquer l'autoclavage des particules obtenues selon d') puis d'une étape f) consistant à pratiquer le séchage desdites particules obtenues selon e') avant la mise en oeuvre de ladite étape g') décrite ci-dessus pour la mise en oeuvre dudit deuxième procédé de préparation du matériau selon l'invention.

Un troisième procédé de préparation du matériau selon l'invention comprend les étapes : a") la redispersion en solution de cristaux zéolithiques de façon à obtenir une solution colloïdale de nanocristaux zéolithiques de taille nanométrique maximale égale à 60 nm, b") le mélange en solution d'au moins un tensioactif, d'au moins ladite solution colloïdale obtenue selon a") et d'au moins une solution limpide contenant les éléments précurseurs d'entités zéolithiques, à savoir au moins un agent structurant, au moins un précurseur silicique et éventuellement au moins un précurseur d'au moins un élément X choisi parmi l'aluminium, le fer, le bore, l'indium et le gallium, ledit mélange étant tel que le rapport des volumes de matières inorganique et organique V_{inorganique}/V_{organique} soit compris entre 0,26 et 4 ; c") l'atomisation par aérosol de ladite solution obtenue à l'étape b") pour conduire à la formation de gouttelettes sphériques ; d") le séchage desdites gouttelettes ; e") l'autoclavage des particules obtenues selon d") ; f") le séchage desdites particules obtenues selon e") et g") l'élimination dudit agent structurant et dudit tensioactif pour l'obtention d'un matériau cristallisé à porosité hiérarchisée et organisée dans les domaines de la microporosité et de la mésoporosité.

La microporosité induite par les parois cristallisées de nature zéolithique du matériau selon l'invention est consécutive à l'emploi d'une solution limpide contenant les éléments précurseurs d'entités zéolithiques conformément à l'étape a) et à la mise en oeuvre conjointe d'un autoclavage des particules conformément à l'étape e) dans le cas du premier procédé de préparation du matériau selon l'invention, ou bien à l'emploi d'une solution colloïdale contenant des nanocristaux zéolithiques de taille nanométrique maximale égale à 60 nm conformément à l'étape a') et éventuellement à la mise en oeuvre conjointe d'un autoclavage des particules conformément à l'étape e') dans le cas du deuxième procédé de préparation du matériau selon l'invention, ou bien à l'emploi d'une solution colloïdale contenant des nanocristaux zéolithiques de taille nanométrique maximale égale à 60 nm conformément à l'étape a') additionnée d'une solution limpide conformément à l'étape b') et à la mise en oeuvre conjointe d'un autoclavage des particules conformément à l'étape e') lorsque le matériau selon l'invention est préparé selon la deuxième variante dudit deuxième procédé de préparation ou bien encore à l'emploi d'une solution colloïdale contenant des nanocristaux zéolithiques de taille nanométrique maximale égale à 60 nm conformément à l'étape a") additionnée d'une solution limpide conformément à l'étape b") et à la mise en oeuvre conjointe d'un autoclavage des particules conformément à l'étape e") lorsque le matériau selon l'invention est préparé selon ledit troisième procédé de préparation. Lesdites solutions contenant des nanocristaux zéolithiques sont obtenues soit *in situ* à partir d'au moins un agent structurant, au moins un précurseur silicique et éventuellement au moins un précurseur d'au moins un élément X choisi parmi l'aluminium, le fer, le bore, l'indium et le gallium dans le cas du deuxième procédé de préparation selon l'invention (étape a')) soit par redispersion en solution de cristaux zéolithiques dans le cas du troisième procédé de préparation selon l'invention (étape a")). La mésostructuration du matériau selon l'invention est consécutive au phénomène de micellisation ou d'auto-assemblage par évaporation induit par la technique dite aérosol, conformément aux étapes c), c') et c") respectivement associées aux premier, deuxième et troisième procédés de préparation du matériau selon l'invention, généré par la présence du tensioactif et de la phase inorganique issue des solutions réalisées lors des étapes b), b') et b") de chacun des trois procédés de préparation du matériau selon l'invention.

### Intérêt de l'invention

Le matériau selon l'invention qui comprend une matrice inorganique mésostructurée, à base d'oxyde de silicium, aux parois microporeuses et cristallisées, présente simultanément les propriétés structurales, texturales et d'acido-basicité propres aux matériaux de la famille des zéolithes et aux matériaux dits mésostructurés. De manière préférée, la matrice à base d'oxyde de silicium formant chacune des particules sphériques élémentaires du matériau selon l'invention comprend, outre du silicium, au moins un élément X choisi parmi l'aluminium, le fer, l'indium et le gallium, préférentiellement l'aluminium, de manière à former une matrice aluminosilicate cristallisée. Le matériau selon l'invention présente alors, lorsque X est l'aluminium, des propriétés d'acido-basicité supérieures aux propriétés d'acido-basicité présentées par des matériaux aluminosilicates aux parois amorphes, dépourvus d'entités zéolithiques cristallisées, et préparés selon des protocoles de synthèse bien connus de l'Homme du métier utilisant des précurseurs inorganiques de silice et d'alumine. Par ailleurs, la présence au sein d'une même particule sphérique de taille micrométrique voire nanométrique de mésopores organisés dans une matrice inorganique microporeuse et cristallisée conduit à un accès privilégié des réactifs et des produits de la réaction aux sites microporeux lors de l'emploi du matériau selon l'invention dans des applications industrielles potentielles. De plus, le matériau selon l'invention est constitué de particules élémentaires sphériques, le diamètre de ces particules étant au maximum égal à 200 µm, de préférence inférieur à 100 µm, variant avantageusement de 50 nm à 20 µm, très avantageusement de 50 nm à 10 µm et de manière encore plus avantageuse de 50 nm à 3 µm. La taille limitée de ces particules ainsi que leur forme sphérique homogène permet d'avoir une meilleure diffusion des réactifs et des produits de la réaction lors de l'emploi du matériau selon l'invention dans des applications industrielles potentielles comparativement à des matériaux connus de l'état de la technique se présentant sous la forme de particules élémentaires de forme non homogène, c'est-à-dire irrégulière, et de taille souvent bien supérieure à 500 nm.

### Exposé de l'invention

La présente invention a pour objet un matériau à porosité hiérarchisée et organisée dans les domaines de la microporosité et de la mésoporosité constitué d'au moins deux particules sphériques élémentaires, chacune desdites particules comprenant une matrice à base d'oxyde de silicium, mésostructurée, ayant un diamètre de mésopores compris entre 1,5 et 30 nm et présentant des parois microporeuses et cristallisées d'épaisseur comprise entre 1 et 60 nm, lesdites particules sphériques élémentaires ayant un diamètre maximal de 200 microns.

Par matériau à porosité hiérarchisée et organisée, on entend au sens de la présente invention un matériau présentant une double porosité à l'échelle de chacune desdites particules sphériques : une mésoporosité, c'est-à-dire la présence de pores organisés à l'échelle mésoporeuse ayant un diamètre uniforme compris entre 1,5 et 30 nm et de préférence entre 2 et 20 nm, répartis de façon homogène et régulière dans chacune desdites particules (mésostructuration) et une microporosité de type zéolithique dont les caractéristiques (type structural de la zéolithe, composition chimique de la charpente zéolithique) sont fonction des entités zéolithiques constituant les parois cristallisées de la matrice de chacune des particules sphériques du matériau selon l'invention. Le matériau selon l'invention présente également une macroporosité texturale intraparticulaire. Il est à noter qu'une porosité de nature microporeuse peut également résulter de l'imbrication du tensioactif, utilisé lors de la préparation du matériau selon l'invention, avec la paroi inorganique au niveau de l'interface organique-inorganique développée lors de la mésostructuration de la composante inorganique dudit matériau selon l'invention. Avantageusement, aucune des particules sphériques constituant le matériau selon l'invention ne présente de macropores.

La matrice à base d'oxyde de silicium, comprise dans chacune des particules sphériques constituant le matériau selon l'invention, est mésostructurée : elle présente des mésopores ayant un diamètre uniforme, c'est-à-dire identique pour chaque mésopore, compris entre 1,5 et 30 nm et de préférence entre 2 et 20 nm, répartis de façon homogène et régulière dans chacune des particules sphériques. La matière située entre les mésopores de chacune desdites particules sphériques est micoporeuse et cristallisée et forme des parois, ou murs, dont l'épaisseur est comprise entre 1 et 60 nm, de préférence entre 1 et 30 nm. L'épaisseur des parois correspond à la distance séparant un premier mésopore d'un second mésopore, le second mésopore étant le pore le plus proche dudit premier mésopore. L'organisation de la mésoporosité décrite ci-dessus conduit à une structuration de la matrice à base d'oxyde de silicium, laquelle peut être hexagonale, vermiculaire ou cubique et de façon préférée vermiculaire. La mésostructuration du matériau selon l'invention peut être de type vermiculaire, hexagonale ou cubique en fonction de la nature du tensioactif employé pour la préparation dudit matériau.

Conformément à l'invention, la matrice à base d'oxyde de silicium formant chacune des particules sphériques du matériau selon l'invention présente des parois cristallisées constituées exclusivement d'entités zéolithiques, lesquelles sont à l'origine de la microporosité présente au sein de chacune des particules sphériques du matériau selon l'invention. Toute zéolithe et en particulier, mais de façon non exhaustive, celles répertoriées dans *l*'"Atlas of zeolite framework types", 5th revised Edition, 2001, C. Baerlocher, W. M. Meier, D. H. Olson peut être employée pour la formation des entités zéolithiques constituant exclusivement les parois cristallisées de la matrice de chacune des particules du matériau selon l'invention dès lors que la mise en solution des éléments précurseurs de ces entités, à savoir au moins un agent structurant, au moins un précurseur silicique et éventuellement au moins un précurseur d'au moins un élément X choisi parmi l'aluminium, le fer, le bore, l'indium et le gallium, de préférence l'aluminium, conformément à l'étape a) du premier procédé de préparation selon l'invention décrit ci-après, que l'obtention de nanocristaux zéolithiques de taille nanométrique maximale égale à 60 nm à partir d'au moins un agent structurant, au moins un précurseur silicique et éventuellement au moins un précurseur d'au moins un élément X choisi parmi l'aluminium, le fer, le bore, l'indium et le gallium conformément à l'étape a') du deuxième procédé de préparation selon l'invention décrit ci-après et que la redispersion en solution de cristaux zéolithiques conformément à l'étape a") du troisième procédé de préparation selon l'invention tel que décrit ci-après, conduise à l'obtention d'une solution stable, c'est-à-dire limpide ou colloïdale, et atomisable. Les entités zéolithiques constituant exclusivement les parois cristallisées de la matrice de chacune des particules du matériau selon l'invention et à l'origine de la microporosité de celui-ci comprennent de préférence au moins une zéolithe choisie parmi les zéolithes ZSM-5, ZSM-48, ZSM-22, ZSM-23, ZBM-30, EU-2, EU-11, Silicalite, Bêta, zéolithe A, Faujasite, Y, USY, VUSY, SDUSY, mordénite, NU-87, NU-88, NU-86, NU-85, IM-5, IM-12, Ferriérite et EU-1. De manière très préférée, lesdites entités zéolithiques constituant les parois cristallisées de la matrice de chacune des particules du matériau selon l'invention comprennent au moins une zéolithe choisie parmi les zéolithes de type structural MFI, BEA, FAU et LTA.

Conformément à l'invention, la matrice à base d'oxyde de silicium formant chacune des particules sphériques élémentaires du matériau selon l'invention est soit entièrement silicique soit, elle comprend, outre du silicium, au moins un élément X choisi parmi l'aluminium, le fer, le bore, l'indium et le gallium, de préférence l'aluminium. Ainsi, les entités zéolithiques constituant exclusivement les parois cristallisées de la matrice de chacune des particules sphériques du matériau selon l'invention et à l'origine de la microporosité de celui-ci comprennent au moins une zéolithe soit entièrement silicique soit contenant, outre du silicium, au moins un élément X choisi parmi l'aluminium, le fer, le bore, l'indium et le gallium, de préférence l'aluminium. Lorsque X est l'aluminium, la matrice du matériau est dans ce cas un aluminosilicate cristallisé.

La mésostructuration du matériau selon l'invention est telle que ladite matrice mésostructurée présente une structure hexagonale, cubique ou vermiculaire en fonction de la nature du tensioactif utilisé pour la mise en oeuvre du matériau selon l'invention.

Conformément à l'invention, lesdites particules sphériques élémentaires constituant le matériau selon l'invention ont un diamètre maximal égal à 200 microns, de préférence inférieur à 100 microns, avantageusement compris entre 50 nm et 20 µm, très avantageusement compris entre 50 nm et 10 µm, et de manière encore plus avantageuse compris entre 50 nm et 3 µm. Plus précisément, elles sont présentes dans le matériau selon l'invention sous la forme d'agrégats.

Le matériau selon l'invention présente avantageusement une surface spécifique comprise entre 100 et 1100 m²/g et de manière très avantageuse comprise entre 250 et 1000 m²/g.

Le matériau selon l'invention présente avantageusement un volume mésoporeux mesuré par volumétrie à l'azote compris entre 0,01 et 1 ml/g et un volume microporeux mesuré par volumétrie à l'azote compris entre 0,01 et 0,4 ml/g.

La présente invention a également pour objet la préparation du matériau selon l'invention.

Un premier procédé de préparation du matériau selon l'invention comprend les étapes : a) la préparation d'une solution limpide contenant les éléments précurseurs d'entités zéolithiques, à savoir au moins un agent structurant, au moins un précurseur silicique et éventuellement au moins un précurseur d'au moins un élément X choisi parmi l'aluminium, le fer, le bore, l'indium et le gallium ; b) le mélange en solution d'au moins un tensioactif et d'au moins ladite solution limpide obtenue selon a) tel que le rapport des volumes de matières inorganique et organique V*_{inorganique}*/V*_{organique}* soit compris entre 0,26 et 4 ; c) l'atomisation par aérosol de ladite solution obtenue à l'étape b) pour conduire à la formation de gouttelettes sphériques ; d) le séchage desdites gouttelettes ; e) l'autoclavage des particules obtenues selon d) ; f) le séchage desdites particules obtenues selon e) et g) l'élimination dudit agent structurant et dudit tensioactif pour l'obtention d'un matériau cristallisé à porosité hiérarchisée et organisée dans les domaines de la microporosité et de la mésoporosité.

Un deuxième procédé de préparation du matériau selon l'invention comprend les étapes : a') la préparation, à partir d'au moins un agent structurant, d'au moins un précurseur silicique et éventuellement d'au moins un précurseur d'au moins un élément X choisi parmi l'aluminium, le fer, le bore, l'indium et le gallium, d'une solution contenant des nanocristaux zéolithiques de taille nanométrique maximale égale à 60 nm afin d'obtenir une solution colloïdale dans laquelle sont dispersés lesdits nanocristaux ; b') le mélange en solution d'au moins un tensioactif et d'au moins ladite solution obtenue selon a') tel que le rapport des volumes de matières inorganique et organique V_{inorganique}/V_{organique} soit compris entre 0,26 et 4 ; c') l'atomisation par aérosol de ladite solution obtenue à l'étape b') pour conduire à la formation de gouttelettes sphériques ; d') le séchage desdites gouttelettes ; et g') l'élimination dudit agent structurant et dudit tensioactif pour l'obtention d'un matériau cristallisé à porosité hiérarchisée et organisée dans les domaines de la microporosité et de la mésoporosité. Selon une première variante dudit deuxième procédé de préparation selon l'invention, ladite étape d') est avantageusement suivie d'une étape e') consistant à pratiquer l'autoclavage des particules obtenues selon d') puis d'une étape f) consistant à procéder au séchage desdites particules obtenues selon e'), ladite étape f) étant ensuite suivie de ladite étape g'). Selon une deuxième variante dudit deuxième procédé de préparation du matériau selon l'invention, l'étape b') est mise en oeuvre en mélangeant en solution au moins un tensioactif, au moins ladite solution colloïdale obtenue selon l'étape a') et au moins une solution limpide contenant les éléments précurseurs d'entités zéolithiques, à savoir au moins un agent structurant, au moins un précurseur silicique et éventuellement au moins un précurseur d'au moins un élément X choisi parmi l'aluminium, le fer, le bore, l'indium et le gallium. Ledit mélange est réalisé dans des conditions telles que le rapport des volumes V_{inorganique}/V_{organique} de matières inorganique et organique engagées dans cette étape b') soit compris entre 0,26 et 4. Selon cette variante, l'étape d') dudit deuxième procédé de préparation du matériau selon l'invention est suivie d'une étape e') consistant à pratiquer l'autoclavage des particules obtenues selon d') puis d'une étape f) consistant à pratiquer le séchage desdites particules obtenues selon e') avant la mise en oeuvre de ladite étape g') décrite ci-dessus pour la mise en oeuvre dudit deuxième procédé de préparation du matériau selon l'invention.

Un troisième procédé de préparation du matériau selon l'invention comprend les étapes : a") la redispersion en solution de cristaux zéolithiques de façon à obtenir une solution colloïdale de nanocristaux zéolithiques de taille nanométrique maximale égale à 60 nm, b") le mélange en solution d'au moins un tensioactif, d'au moins ladite solution colloïdale obtenue selon a") et d'au moins une solution limpide contenant les éléments précurseurs d'entités zéolithiques, à savoir au moins un agent structurant, au moins un précurseur silicique et éventuellement au moins un précurseur d'au moins un élément X choisi parmi l'aluminium, le fer, le bore, l'indium et le gallium, ledit mélange étant tel que le rapport des volumes de matières inorganique et organique V_{inorganique}/V_{organique} soit compris entre 0,26 et 4 ; c") l'atomisation par aérosol de ladite solution obtenue à l'étape b") pour conduire à la formation de gouttelettes sphériques ; d") le séchage desdites gouttelettes ; e") l'autoclavage des particules obtenues selon d") ; f") le séchage desdites particules obtenues selon e") et g") l'élimination dudit agent structurant et dudit tensioactif pour l'obtention d'un matériau cristallisé à porosité hiérarchisée et organisée dans les domaines de la microporosité et de la mésoporosité.

La solution limpide contenant les éléments précurseurs d'entités zéolithiques préparée au cours de l'étape a) du premier procédé de préparation du matériau selon l'invention, de l'étape b') de la deuxième variante du deuxième procédé de préparation du matériau selon l'invention et de l'étape b") du troisième procédé de préparation du matériau selon l'invention, et la solution colloïdale contenant des nanocristaux zéolithiques de taille nanométrique maximale égale à 60 nm préparées au cours des étapes a') et a") respectivement des deuxième et troisième procédés de préparation du matériau selon l'invention, sont préparées à partir de protocoles opératoires connus de l'Homme du métier.

Le précurseur silicique utilisé pour la mise en oeuvre des étapes a), a') et b") respectivement des premier, deuxième et troisième procédés de préparation selon l'invention ainsi que pour la mise en oeuvre de l'étape b') de la deuxième variante du deuxième procédé de préparation selon l'invention, est choisi parmi les précurseurs d'oxyde de silicium bien connus de l'Homme du métier. En particulier, on utilise avantageusement un précurseur silicique choisi parmi les précurseurs de silice habituellement utilisés dans la synthèse des zéolithes, par exemple on utilise de la silice solide en poudre, de l'acide silicique, de la silice colloïdale, de la silice dissoute ou du tétraéthoxysilane encore appelé tétraéthylorthosilicate (TEOS). De manière préférée, le précurseur silicique est le TEOS.

Le précurseur de l'élément X, éventuellement utilisé pour la mise en oeuvre des étapes a), a') et b") respectivement des premier, deuxième et troisième procédés de préparation selon l'invention ainsi que pour la mise en oeuvre de l'étape b') de la deuxième variante du deuxième procédé de préparation selon l'invention, peut être tout composé comprenant l'élément X et pouvant libérer cet élément en solution, notamment en solution aqueuse ou aquo-organique, sous forme réactive. Dans le cas préféré où X est l'aluminium, le précurseur aluminique est avantageusement un sel inorganique d'aluminium de formule AlZ₃, Z étant un halogène, un nitrate ou un hydroxyde. De préférence, Z est le chlore. Le précurseur aluminique peut également être un sulfate d'aluminium de formule Al₂(SO₄)₃. Le précurseur aluminique peut être aussi un précurseur organométallique de formule Al(OR)₃ ou R = éthyle, isopropyle, n-butyle, s-butyle (Al(O^{S}C₄H₉)₃) ou t-butyle ou un précurseur chélaté tel que l'aluminium acétylacétonate (Al(C₅H₈O₂)₃). De préférence, R est le s-butyle. Le précurseur aluminique peut aussi être de l'aluminate de sodium ou d'ammonium ou de l'alumine proprement dite sous l'une de ses phases cristallines connues de l'Homme du métier (alpha, delta, teta, gamma), de préférence sous forme hydratée ou qui peut être hydratée.

On peut également utiliser des mélanges des précurseurs cités ci-dessus. Certains ou l'ensemble des précurseurs aluminiques et siliciques peuvent éventuellement être ajoutés sous la forme d'un seul composé comprenant à la fois des atomes d'aluminium et des atomes de silicium, par exemple une silice alumine-amorphe.

L'agent structurant utilisé pour la mise en oeuvre des étapes a), a') et b") respectivement des premier, deuxième et troisième procédés de préparation selon l'invention ainsi que pour la mise en oeuvre de l'étape b') de la deuxième variante du deuxième procédé de préparation selon l'invention peut être ionique ou neutre selon la zéolithe à synthétiser. Il est fréquent d'utiliser les agents structurants de la liste non exhaustive suivante : des cations organiques azotés tel que le tétrapropylammonium (TPA), des éléments de la famille des alcalins (Cs, K, Na, etc.), des éthercouronnes, des diamines ainsi que tout autre agent structurant bien connu de l'Homme du métier pour la synthèse de zéolithe.

La solution limpide contenant des éléments précurseurs d'entités zéolithiques (étape a) du premier procédé de préparation de l'invention, étape b') de la deuxième variante du deuxième procédé de préparation de l'invention et étape b") du troisième procédé de préparation de l'invention) ainsi que la solution colloïdale (étape a') du deuxième procédé de préparation de l'invention, étape a") du troisième procédé de préparation de l'invention) contenant des nanocristaux zéolithiques, employées pour la mise en oeuvre des différentes étapes des différents procédés de préparation du matériau de l'invention, sont synthétisés selon des protocoles opératoires connus de l'Homme du métier. En particulier, des solutions limpides contenant des éléments précurseurs d'entités zéolithiques de type bêta ou des solutions colloïdales contenant des nanocristaux zéolithiques de type bêta sont réalisées à partir du protocole opératoire décrit par P. Prokesova, S. Mintova, J. Cejka, T. Bein et coll., Micropor. Mesopor. Mater., 2003, 64, 165. Des solutions limpides contenant des éléments précurseurs d'entités zéolithiques de type FAU ou des solutions colloïdales contenant des nanocristaux zéolithiques de type FAU sont réalisées à partir des protocoles opératoires décrits par Y. Liu, W. Z. Zhang, T. J. Pinnavaia et coll., J. Am. Chem. Soc., 2000, 122, 8791 et K. R. Kloetstra, H. W. Zandbergen, J. C. Jansen, H. vanBekkum, Microporous Mater., 1996, 6, 287. Des solutions limpides contenant des éléments précurseurs d'entités zéolithiques de type ZSM-5 ou des solutions colloïdales contenant des nanocristaux zéolithiques de type ZSM-5 sont réalisées à partir du protocole opératoire décrit par A. E. Persson, B. J. Schoeman, J. Sterte, J. -E. Otterstedt, Zeolites, 1995, 15, 611. Dans le cas particulier d'un matériau purement silicique, des solutions limpides contenant des éléments précurseurs d'entités zéolithiques de type silicalite ou des solutions colloïdales contenant des nanocristaux zéolithiques de type silicalite sont réalisées avantageusement à partir du protocole opératoire décrit par A. E. Persson, B. J. Schoeman, J. Sterte, J. -E. Otterstedt, Zeolites, 1994, 14, 557.

On obtient généralement la solution limpide contenant les éléments précurseurs d'entités zéolithiques selon les étapes a), b') et b") respectivement des premier, deuxième variante du deuxième et troisième procédés de préparation selon l'invention ou bien la solution colloïdale contenant des nanocristaux zéolithiques de taille nanométrique maximale égale à 60 nm selon l'étape a') du deuxième procédé de préparation selon l'invention en préparant un mélange réactionnel renfermant au moins un précurseur silicique, éventuellement au moins un précurseur d'au moins un élément X choisi parmi l'aluminium, le fer, le bore, l'indium et le gallium, de préférence au moins un précurseur aluminique, et au moins un agent structurant. Le mélange réactionnel est soit aqueux soit aquo-organique, par exemple un mélange eau-alcool.

Conformément à l'étape a) du premier procédé de préparation selon l'invention, le mélange réactionnel peut être mis sous conditions hydrothermales sous une pression autogène, éventuellement en ajoutant un gaz, par exemple de l'azote, à une température comprise entre la température ambiante et 200°C, de préférence entre la température ambiante et 170°C et de manière encore préférentielle à une température qui ne dépasse pas 120°C jusqu'à la formation d'une solution limpide contenant les éléments précurseurs des entités zéolithiques, lesquelles constituent exclusivement les parois cristallisées de la matrice de chacune des particules sphériques du matériau selon l'invention. Selon un mode opératoire préféré, le mélange réactionnel renfermant au moins un agent structurant, au moins un précurseur silicique et éventuellement au moins un précurseur d'au moins un élément X choisi parmi l'aluminium, le fer, le bore, l'indium et le gallium est mûri à température ambiante, pendant une durée avantageusement comprise entre 15 et 20 heures, de façon à obtenir une solution limpide contenant les éléments précurseurs d'entités zéolithiques susceptibles de générer la formation d'entités zéolithiques cristallisées au cours de l'étape e) d'autoclavage dudit premier procédé de préparation du matériau selon l'invention. La solution limpide contenant des précurseurs d'entités zéolithiques selon l'étape b') de la deuxième variante dudit deuxième procédé de préparation et celle selon l'étape b") dudit troisième procédé de préparation selon l'invention sont avantageusement préparées de la même manière que ladite solution limpide contenant des précurseurs d'entités zéolithiques selon l'étape a) dudit premier procédé de préparation selon l'invention.

Conformément à l'étape a') du deuxième procédé selon l'invention, le mélange réactionnel est avantageusement mis sous conditions hydrothermales sous une pression autogène, éventuellement en ajoutant du gaz, par exemple de l'azote, à une température comprise entre 50 et 200°C, de préférence entre 60 et 170°C et de manière encore préférentielle à une température comprise entre 60 et 120°C jusqu'à la formation de nanocristaux zéolithiques de taille nanométrique maximale égale à 60 nm. De manière préférée, le mélange réactionnel est mûri à une température comprise entre 70°C et 100°C pendant une durée comprise entre 3 et 6 jours. A l'issue dudit traitement hydrothermal, on obtient une solution colloïdale dans laquelle lesdits nanocristaux se trouvent à l'état dispersé. La synthèse desdits nanocristaux zéolithiques est suivie par diffraction des rayons X aux grands angles et la taille desdits nanocristaux est contrôlée par diffusion de la lumière et par microscopie électronique à transmission. L'Homme du métier saura ajuster les conditions opératoires de manière à obtenir ladite solution colloïdale dans laquelle lesdits nanocristaux, de taille nanométrique maximale égale à 60 nm, se trouvent à l'état dispersé.

Il est préféré de travailler dans un milieu réactionnel basique au cours des diverses étapes des premiers et deuxième procédés de préparation selon l'invention afin de favoriser le développement des entités zéolithiques constituant les parois cristallisées de la matrice de chacune des particules du matériau selon l'invention. La basicité de la solution limpide selon l'étape a) dudit premier procédé de préparation ou de la solution colloïdale selon l'étape a') dudit deuxième procédé de préparation ou de la solution limpide selon l'étape b') de la deuxième variante dudit deuxième procédé de préparation de l'invention est avantageusement assurée par la basicité de l'agent structurant employé ou bien par basification du mélange réactionnel par l'ajout d'un composé basique, par exemple un hydroxyde de métal alcalin, de préférence de l'hydroxyde de sodium, dans l'étape a), a') ou b').

Conformément à l'étape a") du troisième procédé de préparation selon l'invention, on utilise des cristaux zéolithiques. Lesdits cristaux zéolithiques peuvent avoir une taille allant au delà de 60 nm. Toute zéolithe cristallisée connue dans l'état de la technique qui a la propriété de se disperser en solution, par exemple en solution aquo-organique, sous la forme de nanocristaux de taille nanométrique maximale égale à 60 nm convient pour la mise en oeuvre de l'étape a"). La dispersion desdits cristaux zéolithiques est réalisée par toute méthode connue de l'Homme du métier, par exemple par sonication. En particulier, lesdits nanocristaux de zéolithes peuvent être purement siliciques ou bien contenir, outre du silicium, au moins un élément X choisi parmi l'aluminium, le fer, le bore, l'indium et le gallium, de préférence l'aluminium. Lesdits cristaux zéolithiques sont synthétisés par des méthodes connues de l'Homme du métier. Les cristaux zéolithiques utilisés dans l'étape a") peuvent être déjà sous la forme de nanocristaux. L'obtention de cristaux zéolithiques se dispersant sous la forme de nanocristaux de taille nanométrique maximale égale à 60 nm est également possible en réalisant une fonctionnalisation de la surface des nanocristaux. Les cristaux zéolithiques utilisés se trouvent soit sous leur forme brute de synthèse, c'est-à-dire contenant encore l'agent structurant, soit sous leur forme calcinée, c'est-à-dire débarrassés dudit agent structurant. Lorsque les cristaux zéolithiques utilisés sont sous leur forme brute de synthèse, ledit agent structurant est éliminé au cours de l'étape g") du troisième procédé de préparation selon l'invention.

Conformément à l'étape b), l'étape b') et l'étape b") respectivement du premier, deuxième et troisième procédé de préparation du matériau selon l'invention, le tensioactif utilisé est un tensioactif ionique ou non ionique ou un mélange des deux. De préférence, le tensioactif ionique est choisi parmi des tensioactifs anioniques tels que les sulfates comme par exemple le dodécylsulfate de sodium (SDS). De préférence, le tensioactif non ionique peut être tout copolymère possédant au moins deux parties de polarités différentes leur conférant des propriétés de macromolécules amphiphiles. Ces copolymères peuvent comporter au moins un bloc faisant partie de la liste non exhaustive des familles de polymères suivantes : les polymères fluorés (-[CH₂-CH₂-CH₂-CH₂-O-CO-R1- avec R1 = C₄F₉, C₈F₁₇, etc.), les polymères biologiques comme les polyacides aminés (poly-lysine, alginates, etc.), les dendrimères, les polymères constitués de chaînes de poly(oxyde d'alkylène). Tout autre copolymère à caractère amphiphile connu de l'Homme du métier peut être utilisé s'il permet d'obtenir une solution stable, c'est-à-dire limpide ou colloïdale, dans les étapes b), b') et b") respectivement des premier, deuxième et troisième procédés de préparation selon l'invention, comme le poly(styrene-b-acrylamide) par exemple (S. Förster, M. Antionnetti, Adv.Mater, 1998, 10, 195-217 ; S. Förster, T.Plantenberg, Angew. Chem. Int. Ed, 2002, 41, 688-714 ; H. Cölfen, Macromol. Rapid Commun, 2001, 22, 219-252). De manière préférée, on utilise dans le cadre de la présente invention un copolymère bloc constitué de chaînes de poly(oxyde d'alkylène). Ledit copolymère bloc est de préférence un copolymère bloc ayant deux, trois ou quatre blocs, chaque bloc étant constitué d'une chaîne de poly(oxyde d'alkylène). Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe. Pour un copolymère à trois blocs, l'un au moins des blocs est constitué d'une chaîne de poly(oxyde d'alkylène) de nature hydrophile tandis que l'un au moins des autres blocs est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées (PEO)ₓ et (PEO)_{z} et les chaînes de poly(oxyde d'alkylène) de nature hydrophobe sont des chaînes de poly(oxyde de propylène) notées (PPO)_{y}, des chaînes de poly(oxyde de butylène), ou des chaînes mixtes dont chaque chaîne est un mélange de plusieurs monomères d'oxyde d'alkylène. De manière très préférée, dans le cas d'un copolymère à trois blocs, celui-ci est constitué de deux chaînes de poly(oxyde d'éthylène) et d'une chaîne de poly(oxyde de propylène). Plus précisément, on utilise un composé de formule (PEO)ₓ-(PPO)_{y}-(PEO)_{z} où x est compris entre 5 et 300 et y est compris entre 33 et 300 et z est compris entre 5 et 300. De préférence, les valeurs de x et z sont identiques. On utilise très avantageusement un composé dans lequel x = 20, y = 70 et z = 20 (P123) et un composé dans lequel x = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques dans les étapes b), b') et b") respectivement des premier, deuxième et troisième procédés de préparation de l'invention. Pour un copolymère à quatre blocs, deux des blocs sont constitués d'une chaîne de poly(oxyde d'alkylène) de nature hydrophile et les deux autres blocs sont constitués d'une chaîne de poly(oxyde d'alkylène) de nature hydrophobe.

La solution obtenue à l'issue des étapes b), b') et b") respectivement des premier, deuxième et troisième procédés de préparation selon l'invention peut être acide, neutre ou basique. De préférence, ladite solution est basique et présente de préférence un pH supérieur à 9, cette valeur du pH étant généralement imposée par le pH de la solution limpide contenant les éléments précurseurs d'entités zéolithiques conformément à l'étape a) du premier procédé de préparation du matériau selon l'invention ou bien de la solution colloïdale contenant des nanocristaux zéolithiques de taille nanométrique maximale égale à 60 nm selon l'étape a') et a") respectivement dudit deuxième et troisième procédés de préparation du matériau selon l'invention. La solution obtenue à l'issue des étapes b), b') et b") peut être aqueuse ou peut être un mélange eau-solvant organique, le solvant organique étant préférentiellement un solvant polaire, notamment un alcool, préférentiellement de l'éthanol.

La quantité en composés organiques, c'est à dire en tensioactif et en agent structurant, présente dans le mélange conformément aux étapes b), b') et b") respectivement des premier, deuxième et troisième procédés de préparation selon l'invention, est définie par rapport à la quantité de matière inorganique présente dans ledit mélange à la suite de l'ajout de la solution limpide contenant les éléments précurseurs d'entités zéolithiques conformément à l'étape a) du premier procédé de préparation du matériau selon l'invention ou bien à la suite de l'ajout de la solution colloïdale contenant des nanocristaux zéolithiques de taille nanométrique maximale égale à 60 nm selon l'étape a') du deuxième procédé de préparation de l'invention et éventuellement de l'ajout de la solution limpide selon l'étape b') si le matériau selon l'invention est préparé selon la deuxième variante dudit deuxième procédé de préparation ou bien encore à la suite de l'ajout de la solution colloïdale contenant des nanocristaux zéolithiques de taille nanométrique maximale égale à 60 nm selon l'étape a") et de la solution limpide introduite à l'étape b") du troisième procédé de préparation de l'invention. La quantité de matière inorganique correspond à la quantité de matière du précurseur silicique et à celle du précurseur de l'élément X lorsqu'il est présent. Le rapport volumique V_{inorganique}/V_{organique} est tel que le système binaire organique-inorganique formé lors des étapes d'atomisation c), c') et c") respectivement des premier, deuxième et troisième procédés de préparation selon l'invention subisse un processus de mésostructuration par auto-assemblage du tensioactif conjointement aux réactions d'hydrolyse/condensation des divers précurseurs inorganiques. Ledit rapport volumique V_{inorganique}/V_{organique} est défini comme suit : V_{inorganique}/V_{organique} = (m_{inorg} * ρ_{org}) / (m_{org} *ρ_{inorg}) où m_{inorg} est la masse finale de la fraction inorganique sous forme d'oxyde(s) condensé(s) dans la particule élémentaire solide obtenue par atomisation, m_{org} est la masse totale de la faction organique non volatile se retrouvant dans la particule élémentaire solide obtenue par atomisation, ρ_{org} et ρ_{inorg} sont les densités respectivement associées aux fractions organique non volatile et inorganique. Dans le cadre de l'invention, lorsque l'élément X est l'aluminium et pour une simplification des calculs (approximations valables pour une grande majorité de fraction organique non volatile et pour une fraction inorganique du type "réseau aluminosilicate"), on considère que ρ_{org} = 1 et ρ_{inorg} = 2. Dans le cadre de l'invention, m_{inorg} correspond généralement à la masse de SiO₂ additionnée de celle de la masse de AlO₂, lorsque X est l'aluminium, et m_{org} correspond à la masse de l'agent structurant, par exemple TPAOH, additionnée de la masse du tensioactif, par exemple le tensioactif F127. Le solvant polaire préférentiellement l'éthanol, ainsi que l'eau et la soude, n'entrent pas en compte dans le calcul dudit rapport V_{inorganique}/V_{organique}. Les espèces comprenant un élément X, de préférence les espèces aluminiques, éventuellement introduites, pour la préparation du matériau de l'invention, après la mise en oeuvre de ladite étape b), b') ou b") respectivement du premier, deuxième ou troisième procédé de préparation ne sont pas prises en compte pour le calcul du rapport volumique V_{inorganique}/V_{organique} défini ci-dessus. Conformément à l'invention, la quantité de matière organique et la quantité de matière inorganique dans le mélange obtenu après la mise en oeuvre de l'étape b), b') et b") respectivement du premier, deuxième et troisième procédés de préparation de l'invention est tel que le rapport V_{inorganique}/V_{organique} est compris dans une gamme de 0,26 à 4, de façon préférée dans une gamme de 0,3 à 2. Conformément aux étapes b), b') et b") respectivement des premier, deuxième et troisième procédés de préparation selon l'invention, la concentration initiale en tensioactif, introduit dans le mélange, définie par c₀ est telle que c₀ est inférieure ou égale à C_{mc}, le paramètre C_{mc} représentant la concentration micellaire critique bien connue de l'Homme du métier, c'est-à-dire la concentration limite au-delà de laquelle se produit le phénomène d'auto-arrangement des molécules du tensioactif dans la solution obtenue à l'issue des étapes b), b') et b") respectivement des premier, deuxième et troisième procédés de préparation de l'invention. Avant atomisation, la concentration en molécules de tensioactif de la solution obtenue à l'issue des étapes b), b') et b") respectivement des premier, deuxième et troisième procédés selon l'invention ne conduit donc pas à la formation de phases micellaires particulières. Dans une mise en oeuvre préférée des différents procédés de préparation selon l'invention, la concentration C₀ est inférieure à la C_{mc}, le rapport V_{inorganique}/V_{organique} est tel que la composition du système binaire vérifie les conditions de composition pour lesquelles un mécanisme de mésostructuration se produit par auto-assemblage coopératif des réactifs (V_{inorganique}/V_{organique} compris entre 0,26 et 4, de préférence entre 0,3 et 2) et ladite solution visée aux étapes b), b') et b") respectivement des premier, deuxième et troisième procédés de préparation selon l'invention est un mélange eau basique-alcool.

L'étape d'atomisation du mélange selon les étapes c), c') et c") respectivement des premier, deuxième et troisième procédés de préparation selon l'invention produit des gouttelettes sphériques. La distribution en taille de ces gouttelettes est de type lognormale. Le générateur d'aérosol utilisé ici est un appareil commercial de modèle 9306 A fourni par TSI ayant un atomiseur 6 jets. L'atomisation de la solution se fait dans une chambre dans laquelle est envoyé un gaz vecteur, un mélange O₂/N₂ (air sec), sous une pression P égale à 1,5 bars.

Conformément aux étapes d), d') et d") respectivement des premier, deuxième et troisième procédés de préparation selon l'invention, on procède au séchage desdites gouttelettes. Ce séchage est réalisé par le transport desdites gouttelettes via le gaz vecteur, le mélange O₂/N₂, dans des tubes en PVC, ce qui conduit à l'évaporation progressive de la solution, par exemple de la solution aquo-organique, préférentiellement de la solution aquo-organique basique, obtenue au cours des étapes b), b') et b") respectivement des premier, deuxième et troisième procédés de préparation selon l'invention, et ainsi à l'obtention de particules élémentaires sphériques. Ce séchage est parfait par un passage desdites particules dans un four dont la température peut être ajustée, la gamme habituelle de température variant de 50 à 600°C et de préférence de 80 à 400°C, le temps de résidence de ces particules dans le four étant de l'ordre de la seconde. Les particules sont alors récoltées sur un filtre. Une pompe placée en fin de circuit favorise l'acheminement des espèces dans le dispositif expérimental aérosol. Le séchage des gouttelettes selon les étapes d), d') et d") respectivement des premier, deuxième et troisième procédés de préparation selon l'invention est avantageusement suivi d'un passage à l'étuve à une température comprise entre 50 et 150°C.

Conformément aux étapes e), e') et e") des premier, variante(s) du deuxième et troisième procédés de préparation selon l'invention, on peut procéder à un autoclavage des particules séchées obtenues à l'issue des étapes d), d') et d") des trois différents procédés de préparation selon l'invention en présence d'un solvant. Cette étape consiste à placer lesdites particules dans une enceinte fermée en présence d'un solvant à une température donnée de façon à travailler en pression autogène inhérente aux conditions opératoires choisies. Le solvant utilisé est avantageusement un solvant polaire protique. De préférence le solvant utilisé est de l'eau. Le volume de solvant introduit est défini par rapport au volume de l'autoclave choisi, de la masse de poudre sèche introduite et de la température de traitement. Ainsi le volume de solvant introduit est compris dans une gamme de 0,01 à 20% par rapport au volume de l'autoclave choisi, de préférence dans une gamme de 0,05 à 5% et de façon plus préférée dans une gamme de 0,05 à 1%. La température d'autoclavage est comprise entre 50 et 200°C, de préférence comprise entre 60 et 170°C et de manière encore préférentielle comprise entre 60 et 120°C de façon à permettre la croissance d'entités zéolithiques dans les parois de la matrice de chacune des particules du matériau selon l'invention sans générer de cristaux de zéolithe de taille trop importante qui désorganiseraient la mésostructuration de chaque particule du matériau selon l'invention.

L'autoclavage est maintenu sur une période de 1 à 196 heures et de préférence sur une période de 10 à 72 heures.

Conformément aux étapes f), f) et f") respectivement des premier, variante(s) du deuxième et troisième procédés de préparation selon l'invention, le séchage des particules après autoclavage est avantageusement réalisé par une mise à l'étuve à une température comprise entre 50 et 150°C.

Dans le cas particulier où l'élément X, éventuellement utilisé pour la préparation du matériau selon l'invention, est l'aluminium et où l'élément sodium est présent dans la solution obtenue conformément aux étapes a) et a') respectivement des premier et deuxième procédés de préparation selon l'invention via l'emploi de l'hydroxyde de sodium et/ou d'un agent structurant sodé assurant la basicité de ladite solution ou bien présent dans les cristaux de zéolithes précurseurs de l'étape a") du troisième procédé selon l'invention, il est préféré de réaliser une étape supplémentaire d'échange ionique permettant d'échanger le cation Na⁺ par le cation NH₄⁺ entre les étapes f) et g) si le matériau selon l'invention est préparé selon ledit premier procédé de préparation, entre les étapes f) et g') si le matériau selon l'invention est préparé selon le deuxième procédé de préparation, entre les étapes f) et g') si le matériau selon l'invention est préparé selon l'une des variante(s) dudit deuxième procédé de préparation, entre les étapes f") et g") si le matériau selon l'invention est préparé selon ledit troisième procédé de préparation. Cet échange, qui conduit à la formation de protons H⁺ après les étapes g), g') et g") respectivement des premier, deuxième et troisième procédés selon l'invention dans le cas préféré où l'élimination de l'agent structurant et du tensioactif est réalisée par calcination sous air, est réalisé selon des protocoles opératoires bien connus de l'Homme du métier. Une des méthodes usuelles consiste à mettre en suspension les particules solides séchées issues des étapes f), d') et f") respectivement des premier, deuxième et troisième procédés de préparation selon l'invention et de l'étape f) de l'une des variantes du deuxième procédé de préparation selon l'invention si elle pratiquée, dans une solution aqueuse de nitrate d'ammonium. L'ensemble est ensuite porté à reflux pendant une durée de 1 à 6 heures. Les particules sont alors récupérées par filtration (centrifugation 9000 tr/mn), lavées puis séchées par passage à l'étuve à une température comprise entre 50 et 150°C. Ce cycle d'échange ionique/lavage/séchage peut être reconduit plusieurs fois et de préférence deux autres fois. Ce cycle d'échange peut être également réalisé après les étapes f) et g) dudit premier procédé de préparation, après les étapes d') et g') dudit deuxième procédé de préparation, après les étapes f) et g') de l'une des variantes dudit deuxième procédé de préparation et après les étapes f") et g") dudit troisième procédé de préparation. Dans ces conditions, l'étape g), g') et g") respectivement du premier, deuxième et troisième procédés de préparation selon l'invention est alors reproduite après le dernier cycle d'échange de façon à générer les protons H⁺ comme explicité ci-dessus.

Conformément aux étapes g), g') et g") respectivement des premier, deuxième et troisième procédés selon l'invention, l'élimination de l'agent structurant et du tensioactif, afin d'obtenir le matériau cristallisé selon l'invention à porosité hiérarchisée et organisée dans les domaines de la microporosité et de la mésoporosité, est avantageusement réalisée par des procédés d'extraction chimique ou par traitement thermique et de préférence par calcination sous air dans une gamme de température de 300 à 1000°C et plus précisément dans une gamme de 400 à 600°C pendant une durée de 1 à 24 heures et de façon préférée pendant une durée de 2 à 12 heures.

Dans le cas où la solution visées aux étapes b), b') et b") respectivement des premier, deuxième et troisième procédés selon l'invention, est un mélange eau-solvant organique, de préférence basique, il est essentiel au cours desdites étapes b), b') et b") que la concentration en tensioactif à l'origine de la mésostructuration de la matrice soit inférieure à la concentration micellaire critique et que le rapport V_{inorganique}/V_{organique} soit compris entre 0,26 et 4, de préférence entre 0,3 et 2 de sorte que l'évaporation de ladite solution aquo-organique, préférentiellement basique, au cours des étapes c), c') et c") respectivement des premier, deuxième et troisième procédés selon l'invention par la technique d'aérosol induise un phénomène de micellisation ou d'auto-assemblage conduisant à la mésostructuration de la matrice du matériau selon l'invention. Lorsque C₀ < C_{mc}, la mésostructuration de la matrice du matériau selon l'invention est consécutive à une concentration progressive, au sein de chaque gouttelette, des éléments précurseurs d'entités zéolithiques de la solution limpide obtenue à l'étape a) du premier procédé de préparation du matériau selon l'invention ou bien des nanocristaux zéolithiques de la solution colloïdale obtenue à l'étape a') dudit deuxième procédé de préparation, ou bien des nanocristaux zéolithiques de la solution colloïdale obtenue à l'étape a') et des éléments précurseurs d'entités zéolithiques de la solution limpide obtenue à l'étape b') de la deuxième variante dudit deuxième procédé de préparation ou bien encore des nanocristaux zéolithiques de la solution colloïdale obtenue à l'étape a") et des éléments précurseurs d'entités zéolithiques de la solution limpide obtenue à l'étape b") dudit troisième procédé de préparation et d'au moins un tensioactif introduit lors des étapes b), b') et b") des trois procédés de préparation selon l'invention, jusqu'à une concentration en tensioactif c > C_{mc} résultant d'une évaporation de la solution aquo-organique.

Selon un premier mode de réalisation préférée de chacun des trois procédés de préparation de l'invention, au moins un précurseur d'au moins un élément X choisi parmi l'aluminium, le fer, le bore, l'indium et le gallium, de préférence l'aluminium, est introduit pour la mise en oeuvre de l'étape b) du premier procédé de préparation de l'invention, de l'étape b') du deuxième procédé de préparation de l'invention, de l'étape b') de l'une des variantes dudit deuxième procédé de préparation de l'invention ou de l'étape b") dudit troisième procédé de préparation de l'invention. Ainsi, le mélange en solution d'au moins un tensioactif et d'au moins ladite solution limpide obtenue selon l'étape a) du premier procédé de l'invention, ou d'au moins un tensioactif et d'au moins ladite solution colloïdale obtenue selon l'étape a') du deuxième procédé de préparation de l'invention, ou d'au moins un tensioactif, d'au moins ladite solution colloïdale obtenue selon l'étape a') et d'au moins ladite solution limpide obtenue selon l'étape b') de la deuxième variante dudit deuxième procédé de préparation, ou encore d'au moins un tensioactif, d'au moins ladite solution colloïdale obtenue selon l'étape a") et d'au moins ladite solution limpide obtenue selon l'étape b") dudit troisième procédé de préparation est réalisé en présence d'au moins un précurseur dudit élément X choisi parmi les précurseurs dudit élément X cité ci-dessus, de préférence parmi les précurseurs aluminiques, décrits plus haut dans la présente description, par exemple pour la mise en oeuvre de ladite étape a) dudit premier procédé de préparation de l'invention. Conformément audit premier mode de réalisation préférée de chacun des trois procédés de l'invention, la préparation de la solution limpide selon l'étape a), l'étape b') ou l'étape b") respectivement du premier, deuxième variante du deuxième ou troisième procédé de préparation de l'invention et celle de la solution colloïdale selon l'étape a') dudit deuxième procédé de préparation est réalisée soit en présence soit en l'absence d'au moins un précurseur d'au moins un élément X.

Selon un deuxième mode de réalisation préférée de chacun des trois procédés de préparation de l'invention, au moins un précurseur d'au moins un élément X choisi parmi l'aluminium, le fer, le bore, l'indium et le gallium, de préférence l'aluminium, est introduit soit au cours de la mise en oeuvre de ladite étape d) et/ou de ladite étape f) et/ou de ladite g) dudit premier procédé de préparation de l'invention, soit au cours de la mise en oeuvre de ladite étape d') et/ou de ladite étape g') dudit deuxième procédé de préparation de l'invention, soit au cours de la mise en oeuvre de ladite étape d') et/ou de ladite étape f) et/ou de ladite étape g') de l'une des variantes dudit deuxième procédé de préparation soit encore au cours de la mise en oeuvre de ladite étape d") et/ou de ladite étape f") et/ou de ladite étape g") dudit troisième procédé de préparation, en vue de produire une modification de surface du matériau selon l'invention. Conformément audit deuxième mode de réalisation préférée de chacun des trois procédés de préparation de l'invention, ledit précurseur d'au moins un élément X, de préférence le précurseur aluminique, est introduit au cours de la mise en oeuvre d'au moins l'une des étapes citées ci-dessus (d, d', d", f, f, f', g, g' et g") par toute technique de modification de surface bien connue de l'Homme du métier telle que le greffage d'au moins un précurseur d'au moins un élément X, l'imprégnation à sec d'au moins un précurseur d'au moins un élément X et l'imprégnation en excès d'au moins un précurseur d'au moins un élément X. Ledit précurseur d'au moins un élément X, de préférence un précurseur aluminique, introduit au cours de la mise en oeuvre d'au moins l'une des étapes citées ci-dessus (d, d', d", f, f, f', g, g' et g") par une technique de modification de surface, est choisi parmi les précurseurs dudit élément X, de préférence parmi les précurseurs aluminiques, décrits plus haut dans la présente description, par exemple ceux utilisés pour la mise en oeuvre de ladite étape a) dudit premier procédé de préparation de l'invention. Conformément audit deuxième mode de réalisation préférée de chacun des trois procédés de préparation de l'invention, l'étape a) et l'étape a') du premier et du deuxième procédés de préparation de l'invention est réalisée en présence ou en l'absence d'au moins un précurseur d'au moins un élément X, de préférence un précurseur aluminique, et l'étape b), l'étape b') ou l'étape b") respectivement du premier, deuxième ou troisième procédé de préparation de l'invention est réalisée en présence ou en l'absence d'au moins un précurseur d'au moins un élément X, de préférence un précurseur aluminique.

Conformément aux trois procédés de préparation du matériau selon l'invention, ledit premier mode de réalisation préférée de chacun des trois procédés de préparation de l'invention et ledit deuxième mode de réalisation préférée de chacun des trois procédés de préparation de l'invention ne sont que des variantes facultatives de chacun des trois procédés de préparation du matériau selon l'invention. Aussi, lorsque la matrice mésostructurée de chacune des particules sphériques du matériau selon l'invention comporte un élément X, de préférence de l'aluminium, ledit élément X, de préférence l'aluminium, est introduit, quand le matériau est préparé selon le premier procédé de préparation de l'invention, soit au cours de ladite étape a) du premier procédé de préparation de l'invention pour la préparation de ladite solution limpide, soit au cours de ladite étape b) conformément audit premier mode de réalisation préférée du premier procédé de préparation de l'invention soit encore au cours de ladite étape d) et/ou de ladite étape f) et/ou de ladite étape g) conformément audit deuxième mode de réalisation préférée du premier procédé de préparation de l'invention. Lorsque le matériau est préparé selon ledit deuxième procédé de préparation de l'invention, ledit élément X, de préférence l'aluminium, est introduit soit au cours de ladite étape a'), soit au cours de ladite étape b') conformément audit premier mode de réalisation préférée du deuxième procédé de préparation de l'invention soit encore au cours de ladite étape d') et/ou de ladite étape f) et/ou de l'étape g') conformément audit deuxième mode de réalisation préférée. Lorsque le matériau est préparé selon ladite deuxième variante dudit deuxième procédé de préparation de l'invention, ledit élément X, de préférence l'aluminium, est introduit soit au cours de ladite étape a'), soit au cours de l'étape b') pour la préparation de ladite solution limpide, soit au cours ladite étape b') conformément audit premier mode de réalisation préférée soit encore au cours de ladite étape d') et/ou de l'étape f) et/ou de l'étape g') conformément audit deuxième mode de réalisation préférée. Lorsque le matériau est préparé selon ledit troisième procédé de préparation de l'invention, l'élément X, de préférence l'aluminium, est introduit soit au cours de ladite étape b") pour la préparation de ladite solution limpide, soit au cours ladite étape b") conformément audit premier mode de réalisation préférée soit encore au cours de ladite d") et/ou de l'étape f") et/ou de l'étape g") conformément audit deuxième mode de réalisation préférée. L'élément X, de préférence l'aluminium, peut également avantageusement être introduit, plusieurs fois, au cours de la mise en oeuvre de plusieurs étapes selon toutes les combinaisons possibles des modes de réalisation décrits ci-dessus. En particulier, il est avantageux d'introduire l'aluminium au cours de ladite étape a) et de ladite étape b) ou au cours de ladite étape a) et de ladite étape d) et/ou de ladite étape e) lorsque le matériau de l'invention est préparé selon ledit premier procédé de préparation de l'invention.

Dans le cas particulier où l'élément X est l'aluminium, l'aluminosilicate cristallisé, obtenu selon l'un des trois procédés de préparation de l'invention, présente alors un rapport molaire Si/Al défini à partir de la quantité en élément silicium introduite lors des étapes a), a') et a") respectivement des premier, deuxième et troisième procédés de préparation selon l'invention et la quantité totale en élément aluminium introduite dans la ou les étape(s) de l'un des trois procédés de préparation selon les différents modes de réalisation préférés décrits ci-dessus. Dans ces conditions et de manière préférée, la gamme du rapport molaire Si/Al du matériau cristallisé selon l'invention est comprise entre 1 et 1000.

Lorsque ledit premier mode de réalisation préféré de chacun des trois procédés de préparation de l'invention est appliqué, les quantités de matière organique et inorganique à introduire pour la mise en oeuvre de l'étape b), l'étape b') ou l'étape b") sont à ajuster en fonction de la quantité de matière supplémentaire en élément X, de préférence en aluminium, introduite dans ladite étape b), b') ou b") selon ledit premier mode de manière à ce que la quantité totale de matière organique et inorganique introduite pour la préparation du matériau selon l'invention permette un phénomène de micellisation conduisant à la mésostructuration de la matrice de chaque particule dudit matériau. L'élément X, de préférence l'aluminium, introduit pour la mise en oeuvre dudit deuxième mode de réalisation préférée de chacun des trois procédés de préparation de l'invention n'intervient pas dans le calcul du rapport V_{inorganique}/V_{organique} tel que défini plus haut dans la présente description dès lors qu'il est introduit après l'étape permettant un phénomène de micellisation conduisant à la mésostructuration de la matrice de chaque particule dudit matériau.

On précise que dans tout le texte de la description de la présente invention, l'expression "deuxième procédé de l'invention", "deuxième procédé de préparation selon l'invention" et "deuxième procédé de préparation du matériau selon l'invention" s'appliquent aussi bien au cas où le matériau selon l'invention est préparé selon le deuxième procédé de l'invention (sans application d'aucune des deux variantes), au cas où le matériau selon l'invention est préparé selon la première variante dudit deuxième procédé de préparation de l'invention ainsi qu'au cas où le matériau selon l'invention est préparé selon la deuxième variante dudit deuxième procédé de préparation de l'invention.

Le matériau cristallisé à porosité hiérarchisée et organisée dans les domaines de la microporosité et de la mésoporosité de la présente invention peut être obtenu sous forme de poudre, de billes, de pastilles, de granulés, ou d'extrudés, les opérations de mises en forme étant réalisées par les techniques classiques connues de l'Homme du métier. De préférence, le matériau à porosité hiérarchisée et organisée dans les domaines de la microporosité et de la mésoporosité selon l'invention est obtenu sous forme de poudre, laquelle est constituée de particules sphériques élémentaires ayant un diamètre maximal de 200 µm, ce qui facilite la diffusion éventuelle des réactifs dans le cas de l'emploi du matériau selon l'invention dans une application industrielle potentielle.

Le matériau de l'invention à porosité hiérarchisée et organisée dans les domaines de la microporosité et de la mésoporosité est caractérisé par plusieurs techniques d'analyses et notamment par diffraction des rayons X aux bas angles (DRX aux bas angles), par diffraction des rayons X aux grands angles (DRX), par volumétrie à l'azote (BET), par microscopie électronique à transmission. (MET), par microscopie électronique à balayage (MEB) et par fluorescence X (FX).

La technique de Diffraction des Rayons X aux bas angles (valeurs de l'angle 2θ comprises entre 0,5 et 3°) permet de caractériser la périodicité à l'échelle nanométrique générée par la mésoporosité organisée de la matrice mésostructurée du matériau de l'invention. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1,5406 Å). Les pics habituellement observés sur les diffractogrammes correspondants à une valeur donnée de l'angle 2θ sont associés aux distances inter réticulaires d₍ₕₖₗ₎ caractéristiques de la symétrie structurale du matériau ((hkl) étant les indices de Miller du réseau réciproque) par la relation de Bragg : 2 d ₍ₕₖₗ₎ * sin (θ) = n * λ. Cette indexation permet alors la détermination des paramètres de maille (abc) du réseau direct, la valeur de ces paramètres étant fonction de la structure hexagonale, cubique, ou vermiculaire obtenue. Pour exemple, le diffractogramme de rayons X bas angles d'un matériau mésostructuré, dont les parois microporeuses et cristallisées de la matrice de chacune des particules sphériques sont constituées d'entités zéolithiques aluminosilicates de type ZSM-5, obtenu selon le premier procédé de préparation du matériau selon l'invention en utilisant du TEOS comme précurseur silicique, Al(O^{s}C₄H₉)₃ comme précurseur aluminique, TPAOH comme agent structurant et le copolymère à bloc particulier dénommé poly(oxyde d'éthylène)₁₀₆-poly(oxyde de propylène)₇₀-poly(oxyde d'éthylène)₁₀₆ (PEO₁₀₆-PPO₇₀-PEO₁₀₆ ou F127) comme tensioactif, présente un pic de corrélation parfaitement résolu correspondant à la distance de corrélation entre pores d caractéristique d'une structure de type vermiculaire et définie par la relation de Bragg 2 d * sin (θ) = n * λ.

La technique de diffraction des rayons X aux grands angles (valeurs de l'angle 2θ comprises entre 5 et 70°) permet de caractériser un solide cristallisé défini par la répétition d'un motif unitaire ou maille élémentaire à l'échelle moléculaire. Comme pour la diffraction des rayons X aux bas angles, les pics observés sur les diffractogrammes correspondants à une valeur donnée de l'angle 2θ sont associés aux distances inter-réticulaires d₍ₕₖₗ₎ caractéristiques de la (des) symétrie(s) structurale(s) du matériau, ((hkl) étant les indices de Miller du réseau réciproque) par la relation de Bragg : 2 d ₍ₕₖₗ₎ * sin (θ) = n * λ. Cette indexation permet alors la détermination des paramètres de maille (abc) du réseau direct. L'analyse DRX aux grands angles est donc adaptée à la caractérisation structurale des entités zéolithiques constitutives de la paroi cristallisée de la matrice de chacune des particules sphériques élémentaires constituant le matériau selon l'invention. En particulier, elle permet d'accéder au diamètre des micropores des entités zéolithiques. Pour exemple, le diffractogramme de rayons X grands angles d'un matériau mésostructuré, dont les parois microporeuses et cristallisées de la matrice de chacune des particules sphériques sont constituées d'entités zéolithiques aluminosilicates de type ZSM-5, obtenu selon le premier procédé de préparation du matériau selon l'invention en utilisant du TEOS comme précurseur silicique, Al(O^{s}C₄H₉)₃ comme précurseur aluminique, TPAOH comme agent structurant et le copolymère à bloc particulier dénommé poly(oxyde d'éthylène)₁₀₆-poly(oxyde de propylène)₇₀-poly(oxyde d'éthylène)₁₀₆ (PEO₁₀₆-PPO₇₀-PEO₁₀₆ ou F127) comme tensioactif, présente le diffractogramme associé au groupe de symétrie Pnma (N°62) de la zéolithe ZSM-5 aux grands angles. La valeur de l'angle obtenue sur le diffractogramme RX permet de remonter à la distance de corrélation d selon la loi de Bragg : 2 d * sin (θ) = n * λ. Les valeurs des paramètres de maille a, b, c (a = 20,1 Å, b = 19,7 Å et c = 13,1 Å) obtenues pour la caractérisation des entités zéolithiques sont cohérentes avec les valeurs obtenues pour une zéolithe ZSM-5 (type structural MFI) bien connues de l'Homme du métier (*"*Collection of simulated XRD powder patterns for zeolites", 4th revised Edition, 2001, M. M. J. Treacy, J. B. Higgins).

La volumétrie à l'azote qui correspond à l'adsorption physique de molécules d'azote dans la porosité du matériau via une augmentation progressive de la pression à température constante renseigne sur les caractéristiques texturales (diamètre de pores, type de porosité, surface spécifique) particulières du matériau selon l'invention. En particulier, elle permet d'accéder à la valeur totale du volume microporeux et mésoporeux du matériau. L'allure de l'isotherme d'adsorption d'azote et de la boucle d'hystérésis peut renseigner sur la présence de la microporosité liée aux entités zéolithiques constituant les parois cristallisées de la matrice de chacune des particules sphériques du matériau selon l'invention et sur la nature de la mésoporosité. L'analyse quantitative de la microporosité du matériau selon l'invention est effectuée à partir des méthodes "t" (méthode de Lippens-De Boer, 1965) ou "αₛ" (méthode proposée par Sing) qui correspondent à des transformées de l'isotherme d'adsorption de départ comme décrit dans l'ouvrage *"*Adsorption by powders and porous solids. Principles, methodology and applications" écrit par F. Rouquerol, J. Rouquerol et K. Sing, Academic Press, 1999. Ces méthodes permettent d'accéder en particulier à la valeur du volume microporeux caractéristique de la microporosité du matériau selon l'invention ainsi qu'à la surface spécifique de l'échantillon. Le solide de référence utilisé est une silice LiChrospher Si-1000 (M. Jaroniec, M. Kruck, J. P. Olivier, Langmuir, 1999, 15, 5410). Pour exemple, l'isotherme d'adsorption d'azote d'un matériau mésostructuré, dont les parois microporeuses et cristallisées de la matrice de chacune des particules sphériques sont constituées d'entités zéolithiques aluminosilicates de type ZSM-5, obtenu selon le premier procédé de préparation du matériau selon l'invention en utilisant du TEOS comme précurseur silicique, Al(O^{s}C₄H₉)₃ comme précurseur aluminique, TPAOH comme agent structurant et le copolymère à bloc particulier dénommé poly(oxyde d'éthylène)₁₀₆-poly(oxyde de propylène)₇₀-poly(oxyde d'éthylène)₁₀₆ (PEO₁₀₆-PPO₇₀-PEO₁₀₆ ou F127) comme tensioactif, présente un saut d'adsorption élevé dans le domaine des faibles valeurs de P/P0 (où P0 est la pression de vapeur saturante à la température T) suivi d'un plateau de très faible pente sur un grand domaine de pression, caractéristiques d'un matériau microporeux et, pour les valeurs de P/P0 plus élevées, une isotherme de type IV ainsi qu'une boucle d'hystérésis de type H1, la courbe de distribution poreuse associée étant quant à elle représentative d'une population de mésopores de taille uniforme centrée dans une gamme de 1,5 à 30 nm. Concernant la matrice mésostructurée, la différence entre la valeur du diamètre des mésopores φ et la distance de corrélation entre mésopores d défini par DRX aux bas angles comme décrit ci-dessus permet d'accéder à la grandeur e où e = d - φ et est caractéristique de l'épaisseur des parois cristallisées de la matrice mésostructurée du matériau selon l'invention. De même, la courbe V_{ads} (ml/g) = f(αₛ) obtenue via la méthode αₛ citée ci-dessus est caractéristique de la présence de microporosité au sein du matériau et conduit à une valeur du volume microporeux comprise dans une gamme de 0,01 à 0,4 ml/g. La détermination du volume microporeux et mésoporeux total et du volume microporeux comme décrite ci-dessus conduit à une valeur du volume mésoporeux du matériau selon l'invention dans une gamme de 0,01 à 1 ml/g.

L'analyse par microscopie électronique par transmission (MET) est une technique également largement utilisée pour caractériser la mésoporosité organisée du matériau selon l'invention. Celle-ci permet la formation d'une image du solide étudié, les contrastes observés étant caractéristiques de l'organisation structurale, de la texture, de la morphologie ou bien de la composition chimique des particules observées, la résolution de la technique atteignant au maximum 0,2 nm. Dans l'exposé qui suit, les photos MET seront réalisées à partir de sections microtomes de l'échantillon afin de visualiser une section d'une particule sphérique élémentaire du matériau selon l'invention. Pour exemple, les images MET obtenues pour un matériau mésostructuré, dont les parois microporeuses et cristallisées de la matrice de chacune des particules sphériques sont constituées d'entités zéolithiques aluminosilicates de type ZSM-5, obtenu selon le premier procédé de préparation du matériau selon l'invention en utilisant du TEOS comme précurseur silicique, Al(O^{s}C₄H₉)₃ comme précurseur aluminique, TPAOH comme agent structurant et le copolymère à bloc particulier dénommé poly(oxyde d'éthylène)₁₀₆-poly(oxyde de propylène)₇₀-poly(oxyde d'éthylène)₁₀₆ (PEO₁₀₆-PPO₇₀-PEO₁₀₆ ou F127) comme tensioactif, présentent des particules élémentaires sphériques ayant une mésostructure vermiculaire, la matière étant définie par les zones sombres. L'analyse de l'image permet également d'accéder aux paramètres d, φ et e caractéristiques de la matrice mésostructurée définis précédemment. L'analyse de l'image permet également de visualiser la présence des entités zéolithiques constitutives des parois du matériau selon l'invention.

La morphologie et la distribution en taille des particules élémentaires ont été établies par analyse de photos obtenues par microscopie électronique à balayage (MEB).

L'invention est illustrée au moyen des exemples suivants.

### EXEMPLES

Dans les exemples qui suivent, la technique aérosol utilisée est celle décrite ci-dessus dans l'exposé de l'invention.

Pour chacun des exemples ci-dessous, on calcule le rapport V_{inorganique}/V_{organique} du mélange issu de l'étape b), de l'étape b') ou de l'étape b"). Ce rapport est défini comme suit : V V_{inorganique}/V_{organique} = (m_{inorg} * ρ_{org}) / (m_{org} ρ_{inorg}) où m_{inorg} est la masse finale de la fraction inorganique sous forme d'oxyde(s) condensé(s), à savoir SiO₂ et Al0₂, dans la particule élémentaire solide obtenue par atomisation, m_{org} est la masse totale de la faction organique non volatile se retrouvant dans la particule élémentaire solide obtenue par atomisation, à savoir le tensioactif et l'agent structurant, ρ_{org} et ρ_{inorg} sont les densités respectivement associées aux fractions organique non volatile et inorganique. Dans les exemples qui suivent, on considère que ρ_{org} = 1 et ρ_{inorg} = 2. Aussi le rapport V_{inorganique}/V_{organique} est calculé comme étant égal à V_{inorganique}/V_{organique} = (m_{SiO2} + m_{AlO2}) / [2*(m_{agent} structurant + m_{tensioactif})]. L'éthanol, la soude, l'eau n'entrent pas en compte dans le calcul dudit rapport V_{inorganique}/V_{organique}.

Exemple 1 (invention) : préparation selon le premier procédé de l'invention d'un matériau à porosité hiérarchisée et organisée dans les domaines de la microporosité et de la mésoporosité dont les parois microporeuses et cristallisées sont constituées d'entités zéolithiques aluminosilicates de type ZSM-5 telles que le rapport molaire Si/Al = 59.

6,86 g d'une solution d'hydroxyde de tétrapropylammonium (TPAOH 40% en masse dans une solution aqueuse) sont ajoutés à 0,37 g de sec-butoxyde d'aluminium (Al(O^{s}C₄H₉)₃). Après 30 min sous vive agitation à température ambiante, 27 g d'eau déminéralisée et 18,75 g de tétraéthylorthosilicate (TEOS) sont ajoutés. Le tout est laissé sous vive agitation à température ambiante pendant 18 heures de manière à obtenir une solution limpide. A cette solution est alors ajoutée une solution contenant 66,61 g d'éthanol, 61,24 g d'eau et 5,73 g de tensioactif F127 (pH du mélange = 13,5). Le rapport V_{inorganique}/V_{organique} du mélange est égal à 0,32. Le tout est laissé sous agitation pendant 10 minutes. L'ensemble est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange O₂/N₂ dans des tubes en PVC. Elles sont ensuite introduites dans un four réglé à une température de séchage fixée à 350°C. La poudre récoltée est alors séchée 18 heures à l'étuve à 95°C. 100 mg de cette poudre est placé dans un autoclave de 1 l en présence de 0,6 ml d'eau distillée. L'autoclave est porté à 95°C pendant 48 heures. La poudre est ensuite séchée à 100°C à l'étuve puis calcinée sous air pendant 5 h à 550°C. Le solide est caractérisé par DRX aux bas angles et aux grands angles, par volumétrie à l'azote, par MET, par MEB, par FX. L'analyse MET montre que le matériau final présente une mésoporosité organisée caractérisée par une structure vermiculaire. L'analyse par volumétrie à l'azote combinée à l'analyse par la méthode αₛ conduit à une valeur du volume microporeux V_{micro} (N₂) de 0,19 ml/g, une valeur du volume mésoporeux V_{méso} (N₂) de 0,48 ml/g et une surface spécifique du matériau final de S = 760 m²/g. Le diamètre mésoporeux φ caractéristique de la matrice mésostructurée est de 6,5 nm. L'analyse DRX aux petits angles conduit à la visualisation d'un pic de corrélation à l'angle 2θ = 0,79°. La relation de Bragg 2 d * sin (θ) = 1,5406 permet de calculer la distance d de corrélation entre les mésopores organisés du matériau, soit d = 11 nm. L'épaisseur des parois du matériau mésostructuré définie par e = d - φ est donc de e = 4,5 nm. L'analyse DRX aux grands angles conduit à la visualisation de pics de diffraction aux angles 2θ = 7,9° et 8,9° compatibles avec la structure cristalline MFI de la zéolithe ZSM-5. Le rapport molaire Si/Al obtenu par FX est de 59. Un cliché MEB des particules élémentaires sphériques ainsi obtenues indique que ces particules ont une taille caractérisée par un diamètre variant de 50 à 3000 nm, la distribution en taille de ces particules étant centrée autour de 300 nm.

Exemple 2 (invention) : préparation selon le deuxième procédé de l'invention d'un matériau à porosité hiérarchisée et organisée dans les domaines de la microporosité et de la mésoporosité dont les parois microporeuses et cristallisées sont constituées d'entités zéolithiques aluminosilicates de type ZSM-5 telles que le rapport molaire Si/Al = 59.

6,86 g d'une solution d'hydroxyde de tétrapropylammonium (TPAOH 40% en masse dans une solution aqueuse) sont ajoutés à 0,37 g de sec-butoxyde d'aluminium (Al(O^{s}C₄H₉)₃).

Après 30 min sous vive agitation à température ambiante, 27 g d'eau déminéralisée et 18,75 g de tétraéthylorthosilicate (TEOS) sont ajoutés. Le tout est laissé sous vive agitation à température ambiante pendant 18 heures. Cette solution est placée dans une étuve à 80°C pendant 25 h de manière à obtenir une solution colloïdale contenant des nanocristaux de zéolithe de type ZSM-5 ayant une taille voisine de 50 nm (analyse par diffusion de la lumière et par MET). A cette suspension refroidie à température ambiante est alors ajoutée une solution contenant 66,61 g d'éthanol, 61,24 g d'eau et 0,17 g de tensioactif F127 (pH du mélange = 13,5). Le rapport V _{inorganique}/V_{organique} du mélange est égal à 0,92. Le tout est laissé sous agitation pendant 10 minutes. L'ensemble est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange O₂/N₂ dans des tubes en PVC. Elles sont ensuite introduites dans un four réglé à une température de séchage fixée à 350°C. La poudre récoltée est alors séchée 18 heures à l'étuve à 95°C. 100 mg de cette poudre est placé dans un autoclave de 1 l en présence de 0,6 ml d'eau distillée. L'autoclave est porté à 95°C pendant 48 heures. La poudre est ensuite séchée à 100°C à l'étuve puis calcinée sous air pendant 5 h à 550°C. Le solide est caractérisé par DRX aux grands angles, par volumétrie à l'azote, par MET, par MEB, par FX. L'analyse MET montre que le matériau final présente une mésoporosité organisée caractérisée par une structure vermiculaire. L'analyse par volumétrie à l'azote combinée à l'analyse par la méthode αₛ conduit à une valeur du volume microporeux V_{micro} (N₂) de 0,15 ml/g, une valeur du volume mésoporeux V_{méso} (N₂) de 0,55 ml/g et une surface spécifique du matériau final de S = 310 m²/g. Le diamètre mésoporeux φ caractéristique de la matrice mésostructurée est de 19 nm. L'analyse MET couplée à l'analyse de volumétrie d'adsorption à l'azote conduit à une valeur de l'épaisseur des parois de l'ordre de 50 nm. L'analyse DRX aux grands angles conduit à la visualisation de pics de diffraction aux angles 2θ = 7,9° et 8,9° compatibles avec la structure cristalline MFI de la zéolithe ZSM-5. Le rapport molaire Si/Al obtenu par FX est de 59. Un cliché MEB des particules élémentaires sphériques ainsi obtenues indique que ces particules ont une taille caractérisée par un diamètre variant de 50 à 3000 nm, la distribution en taille de ces particules étant centrée autour de 300 nm.

Exemple 3 (invention) : préparation selon le troisième procédé de l'invention d'un matériau à porosité hiérarchisée et organisée dans les domaines de la microporosité et de la mésoporosité dont les parois microporeuses et cristallisées sont constituées d'entités zéolithiques aluminosilicates de type ZSM-5 telles que le rapport molaire Si/Al = 29.

3,27 g d'une solution d'hydroxyde de tétrapropylammonium (TPAOH 40% en masse dans une solution aqueuse) sont ajoutés à 0,48 g de sec-butoxyde d'aluminium (Al(O^{s}C₄H₉)₃). Après 30 min sous vive agitation à température ambiante, 8,40 g d'eau déminéralisée et 5,97 g de tétraéthylorthosilicate (TEOS) sont ajoutés. Le tout est laissé sous vive agitation à température ambiante pendant 5 jours de manière à obtenir une solution limpide. 3,6 g de nanocristaux de zéolithe ZSM-5 (MFI) brute de synthèse (Si/Al=60) et ayant une taille égale à 40 nm sont ajoutés à cette solution et dispersés par sonification pendant 1 heure. Est alors ajoutée une solution contenant 66,61 g d'éthanol, 61,24 g d'eau et 0,23 g de tensioactif F127 (pH du mélange = 13,5). Le rapport V _{inorganique}/V_{organique} du mélange est égal à 1,82. Le tout est laissé sous agitation pendant 10 minutes et la dispersion des cristaux est parfaite par sonification pendant 30 minutes. L'ensemble est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange O₂/N₂ dans des tubes en PVC. Elles sont ensuite introduites dans un four réglé à une température de séchage fixée à 350°C. La poudre récoltée est alors séchée 18 heures à l'étuve à 95°C. 100 mg de cette poudre est placé dans un autoclave de 1 l en présence de 0,6 ml d'eau distillée. L'autoclave est porté à 95°C pendant 48 heures. La poudre est ensuite séchée à 100°C puis calcinée sous air pendant 5 h à 550°C. Le solide est caractérisé par DRX aux grands angles, par volumétrie à l'azote, par MET, par MEB, par FX. L'analyse MET montre que le matériau final présente une mésoporosité organisée caractérisée par une structure vermiculaire. L'analyse par volumétrie à l'azote combinée à l'analyse par la méthode αₛ conduit à une valeur du volume microporeux V_{micro} (N₂) de 0,17 ml/g, une valeur du volume mésoporeux V_{méso} (N₂) de 0,43 ml/g et une surface spécifique du matériau final de S = 340 m²/g. Le diamètre mésoporeux φ caractéristique de la matrice mésostructurée est de 20 nm. L'analyse MET couplée à l'analyse de volumétrie d'adsorption à l'azote conduit à une valeur de l'épaisseur des parois de l'ordre de 50 nm. L'analyse DRX aux grands angles conduit à la visualisation de pics de diffraction aux angles 2θ = 7,9° et 8,9° compatibles avec la structure cristalline MFI de la zéolithe ZSM-5. Le rapport molaire Si/Al obtenu par FX est de 29. Un cliché MEB des particules élémentaires sphériques ainsi obtenues indique que ces particules ont une taille caractérisée par un diamètre variant de 50 à 3000 nm, la distribution en taille de ces particules étant centrée autour de 300 nm.

Exemple 4 (invention) : préparation selon le troisième procédé de l'invention d'un matériau à porosité hiérarchisée et organisée dans les domaines de la microporosité et de la mésoporosité dont les parois microporeuses et cristallisées sont constituées d'entités zéolithiques de zéolithe Béta (BEA) telles que le rapport molaire Si/Al = 29.

2,37 g d'une solution d'hydroxyde de tétraéthylammonium (TEAOH 40% en masse dans une solution aqueuse) sont ajoutés à 0,48 g de sec-butoxyde d'aluminium (Al(O^{s}C₄H₉)₃). Après 30 min sous vive agitation à température ambiante, 8,94 g d'eau déminéralisée et 5,97 g de tétraéthylorthosilicate (TEOS) sont ajoutés. Le tout est laissé sous vive agitation à température ambiante pendant 5 jours de manière à obtenir une solution limpide. 3,6 g de nanocristaux de zéolithe Béta (BEA) brute de synthèse (Si/Al=60), de taille égale à 40 nm, sont ajoutés à cette solution et dispersés par sonification pendant 1 heure. Est alors ajoutée une solution contenant 66,61 g d'éthanol, 61,24 g d'eau et 0,23 g de tensioactif F127 (pH du mélange = 11,5). Le rapport V _{inorganique}/V_{organique} du mélange est égal à 2,38. Le tout est laissé sous agitation pendant 10 minutes et la dispersion des cristaux est parfaite par sonification pendant 30 minutes. L'ensemble est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange O₂/N₂ dans des tubes en PVC. Elles sont ensuite introduites dans un four réglé à une température de séchage fixée à 350°C. La poudre récoltée est alors séchée 18 heures à l'étuve à 95°C. 100 mg de cette poudre est placé dans un autoclave de 1 L en présence de 0,6 ml d'eau distillée. L'autoclave est porté à 95°C pendant 48 heures. La poudre est ensuite séchée à 100°C à l'étuve puis calcinée sous air pendant 5 h à 550°C. Le solide est caractérisé par DRX aux grands angles, par volumétrie à l'azote, par MET, par MEB, par FX. L'analyse MET montre que le matériau final présente une mésoporosité organisée caractérisée par une structure vermiculaire. L'analyse par volumétrie à l'azote combinée à l'analyse par la méthode αₛ conduit à une valeur du volume microporeux V_{micro} (N₂) de 0,21 ml/g, une valeur du volume mésoporeux V_{méso} (N₂) de 0,41 ml/g et une surface spécifique du matériau final de S = 410 m²/g. Le diamètre mésoporeux φ caractéristique de la matrice mésostructurée est de 18 nm.

L'analyse MET couplée à l'analyse de volumétrie d'adsorption à l'azote conduit à une valeur de l'épaisseur des parois de l'ordre de 50 nm. L'analyse DRX aux grands angles conduit à la visualisation de pics de diffraction à l'angle 2θ = 7,7° compatible avec la structure cristalline BEA de la zéolithe Béta. Le rapport molaire Si/Al obtenu par FX est de 29. Un cliché MEB des particules élémentaires sphériques ainsi obtenues indique que ces particules ont une taille caractérisée par un diamètre variant de 50 à 3000 nm, la distribution en taille de ces particules étant centrée autour de 300 nm.

Exemple 5 (invention) : préparation selon le deuxième procédé de l'invention d'un matériau à porosité hiérarchisée et organisée dans les domaines de la microporosité et de la mésoporosité dont les parois microporeuses et cristallisées sont constituées d'entités zéolithiques aluminosilicates telles que le rapport molaire Si/Al = 13.

6,86 g d'une solution d'hydroxyde de tétrapropylammonium (TPAOH 40% en masse dans une solution aqueuse) sont ajoutés à 0,37 g de sec-butoxyde d'aluminium (Al(O^{s}C₄H₉)₃). Après 30 min sous vive agitation à température ambiante, 27 g d'eau déminéralisée et 18,75 g de tétraéthylorthosilicate (TEOS) sont ajoutés. Le tout est laissé sous vive agitation à température ambiante pendant 18 heures. Cette solution est placée dans une étuve à 80°C pendant 25 h. A cette suspension refroidie à température ambiante est alors ajoutée une solution contenant 66,61 g d'éthanol, 61,24 g d'eau et 0,17 g de tensioactif F127 (pH du mélange = 13,5). Le rapport V _{inorganique}/V_{organique} du mélange est égal à 0,92. Le tout est laissé sous agitation pendant 10 minutes. L'ensemble est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange O₂/N₂ dans des tubes en PVC. Elles sont ensuite introduites dans un four réglé à une température de séchage fixée à 350°C. La poudre récoltée est alors séchée 18 heures à l'étuve à 95°C. 250 mg de cette poudre est placé dans un autoclave de 2,5 l en présence de 1,5 ml d'eau distillée. L'autoclave est porté à 95°C pendant 48 heures. La poudre est ensuite calcinée sous air pendant 5 h à 550°C. 100 mg de cette poudre est placé sous vide primaire à 110°C durant 4 heures puis inertée sous argon. 0,255 g de (Al(O^{s}C₄H₉)₃) est dissout dans 10 ml de pentane sous atmosphère inerte puis sont ajoutés à la poudre. Le mélange est ensuite porté à reflux sous agitation 12 h. Le solide obtenu est lavé trois fois par 10 ml de pentane puis séché sous flux d'argon durant 2 heures, tiré sous vide, séché à l'air ambiant puis à l'étuve à 100°C une nuit. La poudre est calcinée 5 h à 550°C. Le solide est caractérisé par DRX aux grands angles, par volumétrie à l'azote, par MET, par MEB, par FX. L'analyse MET montre que le matériau final présente une mésoporosité organisée caractérisée par une structure vermiculaire. L'analyse par volumétrie à l'azote combinée à l'analyse par la méthode αₛ conduit à une valeur du volume microporeux V_{micro} (N₂) de 0,09 ml/g, une valeur du volume mésoporeux V_{méso} (N₂) de 0,45 ml/g et une surface spécifique du matériau final de S = 280 m²/g. Le diamètre mésoporeux φ caractéristique de la matrice mésostructurée est de 17 nm. L'analyse MET couplée à l'analyse de volumétrie d'adsorption à l'azote conduit à une valeur de l'épaisseur des parois de l'ordre de 50 nm. L'analyse DRX aux grands angles conduit à la visualisation de pics de diffraction aux angles 2θ = 7,9° et 8,9° compatibles avec la structure cristalline MFI de la zéolithe ZSM-5. Le rapport molaire Si/Al obtenu par FX est de 13. Un cliché MEB des particules élémentaires sphériques ainsi obtenues indique que ces particules ont une taille caractérisée par un diamètre variant de 50 nm à 3 µm, la distribution en taille de ces particules étant centrée autour de 300 nm.

## Revendications

1. Matériau à porosité hiérarchisée et organisée dans les domaines de la microporosité et de la mésoporosité constitué d'au moins deux particules sphériques élémentaires, chacune desdites particules comprenant une matrice à base d'oxyde de silicium, mésostructurée, ayant un diamètre de mésopores compris entre 1,5 et 30 nm et présentant des parois microporeuses et cristallisées d'épaisseur comprise entre 1 et 60 nm, lesdites particules sphériques élémentaires ayant un diamètre maximal de 200 microns.

2. Matériau selon la revendication 1 tel que le diamètre des mésopores est compris entre 2 et 20 nm.

3. Matériau selon la revendication 1 ou la revendication 2 tel que lesdites parois cristallisées sont constituées exclusivement d'entités zéolithiques.

4. Matériau selon la revendication 3 tel que lesdites entités zéolithiques comprennent au moins une zéolithe choisie parmi les zéolithes de type structural MFI, BEA, FAU et LTA.

5. Matériau selon l'une des revendications 1 à 4 tel que la matrice à base d'oxyde de silicium est entièrement silicique.

6. Matériau selon l'une des revendications 1 à 4 tel que la matrice à base d'oxyde de silicium comprend au moins un élément X choisi parmi l'aluminium, le fer, le bore, l'indium et le gallium.

7. Matériau selon la revendication 6 tel que l'élément X est l'aluminium.

8. Matériau selon l'une des revendications 1 à 7 tel que ladite matrice mésostructurée présente une structure hexagonale, cubique ou vermiculaire.

9. Matériau selon l'une des revendications 1 à 8 tel que lesdites particules sphériques élémentaires présentant un diamètre compris entre 50 nm et 3 microns.

10. Matériau selon l'une des revendications 1 à 9 tel qu'il présente une surface spécifique comprise entre 100 et 1100 m²/g.

11. Procédé de préparation d'un matériau selon l'une des revendications 1 à 10 comprenant les étapes : a) la préparation d'une solution limpide contenant les éléments précurseurs d'entités zéolithiques, à savoir au moins un agent structurant, au moins un précurseur silicique et éventuellement au moins un précurseur d'au moins un élément X choisi parmi l'aluminium, le fer, le bore, l'indium et le gallium ; b) le mélange en solution d'au moins un tensioactif et d'au moins ladite solution limpide obtenue selon a) tel que le rapport des volumes de matières inorganique et organique V_{inorganique}/V_{organique} soit compris entre 0,26 et 4 ; c) l'atomisation par aérosol de ladite solution obtenue à l'étape b) pour conduire à la formation de gouttelettes sphériques ; d) le séchage desdites gouttelettes ; e) l'autoclavage des particules obtenues selon d) ; f) le séchage desdites particules obtenues selon e) et g) l'élimination dudit agent structurant et dudit tensioactif pour l'obtention d'un matériau cristallisé à porosité hiérarchisée et organisée dans les domaines de la microporosité et de la mésoporosité.

12. Procédé de préparation d'un matériau selon l'une des revendications 1 à 10 comprenant les étapes : a') la préparation, à partir d'au moins un agent structurant, d'au moins un précurseur silicique et éventuellement d'au moins un précurseur d'au moins un élément X choisi parmi l'aluminium, le fer, le bore, l'indium et le gallium, d'une solution contenant des nanocristaux zéolithiques de taille nanométrique maximale égale à 60 nm afin d'obtenir une solution colloïdale dans laquelle sont dispersés lesdits nanocristaux ; b') le mélange en solution d'au moins un tensioactif et d'au moins ladite solution obtenue selon a') tel que le rapport des volumes de matières inorganique et organique V_{inorganique}/V_{organique} soit compris entre 0,26 et 4 ; c') l'atomisation par aérosol de ladite solution obtenue à l'étape b') pour conduire à la formation de gouttelettes sphériques ; d') le séchage desdites gouttelettes ; et g') l'élimination dudit agent structurant et dudit tensioactif pour l'obtention d'un matériau cristallisé à porosité hiérarchisée et organisée dans les domaines de la microporosité et de la mésoporosité.

13. Procédé de préparation selon la revendication 12 tel que ladite étape d') est suivie d'une étape e') consistant à pratiquer l'autoclavage des particules obtenues selon d') puis d'une étape f) consistant à procéder au séchage desdites particules obtenues selon e'), ladite étape f) étant ensuite suivie de ladite étape g').

14. Procédé de préparation selon la revendication 13 tel que l'étape b') est mise en oeuvre en mélangeant en solution au moins un tensioactif, au moins ladite solution colloïdale obtenue selon l'étape a') et au moins une solution limpide contenant les éléments précurseurs d'entités zéolithiques, à savoir au moins un agent structurant, au moins un précurseur silicique et éventuellement au moins un précurseur d'au moins un élément X choisi parmi l'aluminium, le fer, le bore, l'indium et le gallium.

15. Procédé de préparation d'un matériau selon l'une des revendications 1 à 10 comprenant les étapes : a") la redispersion en solution de cristaux zéolithiques de façon à obtenir une solution colloïdale de nanocristaux zéolithiques de taille nanométrique maximale égale à 60 nm, b") le mélange en solution d'au moins un tensioactif, d'au moins ladite solution colloïdale obtenue selon a") et d'au moins une solution limpide contenant les éléments précurseurs d'entités zéolithiques, à savoir au moins un agent structurant, au moins un précurseur silicique et éventuellement au moins un précurseur d'au moins un élément X choisi parmi l'aluminium, le fer, le bore, l'indium et le gallium, ledit mélange étant tel que le rapport des volumes de matières inorganique et organique V_{inorganique}/V_{organique} soit compris entre 0,26 et 4 ; c") l'atomisation par aérosol de ladite solution obtenue à l'étape b") pour conduire à la formation de gouttelettes sphériques ; d") le séchage desdites gouttelettes ; e") l'autoclavage des particules obtenues selon d") ; f") le séchage desdites particules obtenues selon e") et g") l'élimination dudit agent structurant et dudit tensioactif pour l'obtention d'un matériau cristallisé à porosité hiérarchisée et organisée dans les domaines de la microporosité et de la mésoporosité.

16. Procédé de préparation selon l'une des revendications 11 à 15 tel que ledit rapport des volumes de matières inorganique et organique est compris entre 0,3 et 2.

17. Procédé de préparation selon l'une des revendications 11 à 16 tel que l'élément X est l'aluminium.

18. Procédé de préparation selon l'une des revendications 11 à 17 tel que ledit tensio-actif est un copolymère à trois blocs, chaque bloc étant constitué d'une chaîne de poly(oxyde d'alkylène).

19. Procédé de préparation selon la revendication 18 tel que ledit copolymère à trois blocs est constitué de deux chaînes de poly(oxyde d'éthylène) et d'une chaîne de poly(oxyde de propylène).

## Claims

1. A material with hierarchical and organized porosity in the microporosity and mesoporosity domains consisting of at least two elementary spherical particles, each one of said particles comprising a matrix based on silicon oxide, mesostructured, having a mesopore diameter ranging between 1.5 and 30 nm and exhibiting microporous and crystallized walls of thickness ranging between 1 and 60 nm, said elementary spherical particles having a maximum diameter of 200 microns.

2. A material as claimed in claim 1, such that the mesopore diameter ranges between 2 and 20 nm.

3. A material as claimed in any one of claims 1 or 2, such that said crystallized walls exclusively consist of zeolitic entities.

4. A material as claimed in claim 3, such that said zeolitic entities comprise at least one zeolite selected from among the zeolites of MFI, BEA, FAU and LTA structural type.

5. A material as claimed in any one of claims 1 to 4, such that said matrix based on silicon oxide is entirely silicic.

6. A material as claimed in any one of claims 1 to 4, such that said matrix based on silicon oxide comprises at least one element X selected from among aluminium, iron, boron, indium and gallium.

7. A material as claimed in claim 6, such that element X is aluminium.

8. A material as claimed in any one of claims 1 to 7, such that said mesostructured matrix has a hexagonal, cubic or vermicular structure.

9. A material as claimed in any one of claims 1 to 8, such that said elementary spherical particles have a diameter ranging between 50 nm and 3 microns.

10. A material as claimed in any one of claims 1 to 9, such that it has a specific surface area ranging between 100 and 1100 m²/g.

11. A method of preparing a material as claimed in any one of claims 1 to 10, comprising the following stages: a) preparing a clear solution containing the zeolitic entity precursor elements, i.e. at least one structuring agent, at least one silicic precursor and possibly at least one precursor of at least one element X selected from among aluminium, iron, boron, indium and gallium ; b) mixing into a solution at least one surfactant and at least said clear solution obtained in stage a) such that the ratio of the volumes of inorganic and organic matter V_{inorganic}/V_{organic} ranges between 0.26 and 4 ; c) aerosol atomizing said solution obtained in stage b) so as to lead to the formation of spherical droplets ; d) drying said droplets ; e) autoclaving the particles obtained in stage d) ; f) drying said particles obtained in stage e) ; and g) eliminating said structuring agent and said surfactant so as to obtain a crystallized material with hierarchical and organized porosity in the microporosity and mesoporosity domains.

12. A method of preparing a material as claimed in any one of claims 1 to 10, comprising the following stages: a') preparing, from at least one structuring agent, at least one silicic precursor and possibly at least one precursor of at least one element X selected from among aluminium, iron, boron, indium and gallium, a solution containing zeolite nanocrystals of maximum nanometric size equal to 60 nm in order to obtain a colloidal solution wherein said nanocrystals are dispersed ; b') mixing into a solution at least one surfactant and at least said solution obtained in stage a') such that the ratio of the volumes of inorganic and organic matter V_{inorganic}/V_{organic} ranges between 0.26 and 4 ; c') aerosol atomizing said solution obtained in stage b') so as to lead to the formation of spherical droplets ; d') drying said droplets ; and g') eliminating said structuring agent and said surfactant so as to obtain a crystallized material with hierarchical and organized porosity in the microporosity and mesoporosity domains.

13. A method as claimed in claim 12, such that said stage d') is followed by a stage e') consisting in autoclaving the particles obtained in stage d'), then by a stage f') consisting in drying said particles obtained in stage e'), said stage f') being then followed by said stage g').

14. A method as claimed in claim 13, such that stage b') is carried out by mixing into a solution at least one surfactant, at least said colloidal solution obtained in stage a') and at least one clear solution containing the zeolitic entity precursor elements, i.e. at least one structuring agent, at least one silicic precursor and possibly at least one precursor of at least one element X selected from among aluminium, iron, boron, indium and gallium.

15. A method of preparing a material as claimed in any one of claims 1 to 10, comprising the following stages: a") redispersing into a solution zeolite crystals so as to obtain a colloidal solution of zeolite nanocrystals of maximum nanometric size equal to 60 nm, b") mixing into a solution at least one surfactant, at least said colloidal solution obtained in a") and at least one clear solution containing the zeolitic entity precursor elements, i.e. at least one structuring agent, at least one silicic precursor and possibly at least one precursor of at least one element X selected from among aluminium, iron, boron, indium and gallium, said mixture being such that the ratio of the volumes of inorganic and organic matter V_{inorganic}/V_{organic} ranges between 0.26 and 4 ; c") aerosol atomizing said solution obtained in stage b") so as to lead to the formation of spherical droplets ; d") drying said droplets ; e") autoclaving the particles obtained in d") ; f") drying said particles obtained in e"), and g") eliminating said structuring agent and said surfactant so as to obtain a crystallized material with hierarchical and organized porosity in the microporosity and mesoporosity domains.

16. A preparation method as claimed in any one of claims 11 to 15, such that the ratio of the inorganic and organic matter volumes ranges between 0.3 and 2.

17. A preparation method as claimed in any one of claims 11 to 16, such that element X is aluminium.

18. A preparation method as claimed in any one of claims 11 to 17, such that said surfactant is a three-block copolymer, each block consisting of a poly(alkylene oxide) chain.

19. A preparation method as claimed in claim 18, such that said three-block copolymer consists of two poly(ethylene oxide) chains and of one poly(propylene oxide) chain.

## Patentansprüche

1. Werkstoff, dessen Porenbeschaffenheit abgestuft und in die Bereiche der Mikroporen und der Mesoporen gegliedert ist, wobei er aus mindestens zwei kugelförmigen Elementarpartikeln besteht, wobei jeder dieser Partikel eine Matrix auf Grundlage von mesostrukturiertem Siliciumoxid umfasst, welche einen Mesoporendurchmesser im Bereich von 1,5 bis 30 nm hat und welche mikroporöse und kristallisierte Wände mit einer Dicke im Bereich von 1 bis 60 nm aufweist, wobei die kugelförmigen Elementarpartikel einen Durchmesser von höchstens 200 Mikrometern haben.

2. Werkstoff nach Anspruch 1, derart, dass der Durchmesser der Mesoporen Im Bereich von 2 bis 20 nm liegt.

3. Werkstoff nach Anspruch 1 oder Anspruch 2, derart, dass die kristallisierten Wände ausschließlich aus Zeolitheinheiten bestehen.

4. Werkstoff nach Anspruch 3, derart, dass die Zeolitheinheiten mindestens ein Zeolith umfassen, das aus den Zeolithen der Strukturtypen MFI, BEA, FAU und LTA ausgewählt ist.

5. Werkstoff nach einem der Ansprüche 1 bis 4, derart, dass die Matrix auf Grundlage von Siliciumoxid vollständig aus Siliciumdioxid besteht.

6. Werkstoff nach einem der Ansprüche 1 bis 4, derart, dass die Matrix, die auf Siliciumoxid basiert, mindestens ein Element X umfasst, das aus Aluminium, Eisen, Bor, Indium und Gallium ausgewählt ist.

7. Werkstoff nach Anspruch 6, derart, dass es sich bei dem Element X um Aluminium handelt.

8. Werkstoff nach einem der Ansprüche 1 bis 7, derart, dass die mesostrukturierte Matrix eine hexagonale, kubische oder vermikuläre Struktur aufweist.

9. Werkstoff nach einem der Ansprüche 1 bis 8, derart, dass die kugelförmigen Elementarpartikel einen Durchmesser Im Bereich von 50 nm bis 3 Mikrometer aufweisen.

10. Werkstoff nach einem der Ansprüche 1 bis 9, derart, dass er eine spezifische Oberfläche im Bereich von 100 bis 1100 m²/g aufweist.

11. Verfahren zur Herstellung eines Werkstoffs nach einem der Ansprüche 1 bis 10, die folgenden Schritte umfassend: a) Herstellen einer klaren Lösung, welche die Vorläuferelemente von Zeolitheinheiten enthält, nämlich mindestens ein strukturgebendes Mittel, mindestens einen Siliciumdioxidvorläufer und möglicherweise mindestens eine Vorläufersubstanz mindestens eines Elements X, das aus Aluminium, Eisen, Bor, Indium und Gallium ausgewählt ist; b) Vermischen mindestens eines Tensids und mindestens der klaren Lösung, die gemäß a) erhalten wurde, In einer Lösung, derart, dass das Volumenverhältnis zwischen anorganischen und organischen Stoffen V_{anorganisch}/V_{anorganisch} im Bereich von 0,26 bis 4 liegt; c) Zerstäuben der Lösung, die in Schritt b) erhalten wurde, als Aerosol, sodass sich kugelförmige Tröpfchen bilden; d) Trocknen der Tröpfchen; e) Autoklavieren der Partikel, die gemäß d) erhalten wurden; f) Trocknen der Partikel, die gemäß e) erhalten wurden, und g) Entfernen des strukturgebenden Mittels und des Tensids, um einen kristallisierten Werkstoff zu erhalten, dessen Porenbeschaffenheit abgestuft und in die Bereiche der Mikroporen und der Mesoporen gegliedert Ist.

12. Verfahren zur Herstellung eines Werkstoffs nach einem der Ansprüche 1 bis 10, die folgenden Schritte umfassend: a') Herstellen, ausgehend von mindestens einem strukturgebenden Mittel, von mindestens einem Siliciumdioxidvorläufer und möglicherweise von mindestens einer Vorläufersubstanz mindestens eines Elements X, das aus Aluminium, Elsen, Bor, Indium und Gallium ausgewählt ist, einer Lösung, die Zeolith-Nanokristalle mit einer Größe im Nanometerbereich von höchstens 60 nm enthält, um eine kolloidale Lösung zu erhalten, in welcher die Nanokristalle dispergiert sind; b') Vermischen mindestens eines Tensids und mindestens der Lösung, die gemäß a') erhalten wurde, In einer Lösung, derart, dass das Volumenverhältnis zwischen anorganischen und organischen Stoffen V_{anorganisch}/V_{anorganisch} im Bereich von 0,26 bis 4 liegt; c') Zerstäuben der Lösung, die In Schritt b') erhalten wurde, als Aerosol, sodass sich kugelförmige Tröpfchen bilden; d') Trocknen der Tröpfchen; und g') Entfernen des strukturgebenden Mittels und des Tensids, um einen kristallisierten Werkstoff zu erhalten, dessen Porenbeschaffenheit abgestuft und in die Bereiche der Mikroporen und der Mesoporen gegliedert ist.

13. Herstellungsverfahren nach Anspruch 12, derart, dass auf den Schritt d') ein zunächst Schritt e') folgt, der darin besteht, die Partikel, welche gemäß d') erhalten wurden, zu autoklavieren, und dann ein Schritt f), der darin besteht, die Partikel, welche gemäß e') erhalten wurden, zu trocknen, wobei danach auf den Schritt f') der Schritt g') folgt.

14. Herstellungsverfahren nach Anspruch 13, derart, dass der Schritt b') erfolgt, Indem mindestens ein Tensid, mindestens die kolloidale Lösung, welche In Schritt a') erhalten wurde, und mindestens eine klare Lösung, welche die Vorläuferelemente von Zeolitheinheiten enthält, nämlich mindestens ein strukturgebendes Mittel, mindestens einen Siliciumdioxidvorläufer und möglicherweise mindestens eine Vorläufersubstanz mindestens eines Elements X, das aus Aluminium, Eisen, Bor, Indium und Gallium ausgewählt ist, in einer Lösung vermischt werden.

15. Verfahren zur Herstellung eines Werkstoffs nach einem der Ansprüche 1 bis 10, die folgenden Schritte umfassend: a") Redispergieren von Zeolith-Kristallen in einer Lösung, sodass eine kolloidale Lösung von Zeolith-Nanokristallen mit einer Größe Im Nanometerbereich von höchstens 60 nm erhalten wird, b") Vermischen mindestens eines Tensids, mindestens der kolloidalen Lösung, welche gemäß a") erhalten wurde, und mindestens einer klaren Lösung, welche die Vorläuferelements von Zeolitheinheiten enthält, nämlich mindestens ein strukturgebendes Mittel, mindestens einen Siliciumdioxidvorläufer und möglicherweise mindestens eine Vorläufersubstanz mindestens eines Elements X, das aus Aluminium, Elsen, Bor, Indium und Gallium ausgewählt ist, In einer Lösung, wobei die Mischung derart beschaffen ist, dass das Volumenverhältnis zwischen anorganischen und organischen Stoffen V_{anorganisch}/V_{anorganisch} im Bereich von 0,26 bis 4 liegt; c") Zerstäuben der Lösung, die in Schritt b") erhalten wurde, als Aerosol, sodass sich kugelförmige Tröpfchen bilden; d") Trocknen der Tröpfchen; e") Autoklavieren der Partikel, die gemäß d") erhalten wurden; f") Trocknen der Partikel, die gemäß e") erhalten wurden, und g") Entfernen des strukturgebenden Mittels und des Tensids, um einen kristallisierten Werkstoff zu erhalten, dessen Porenbeschaffenhelt abgestuft und in die Bereiche der Mikroporen und der Mesoporen gegliedert Ist.

16. Herstellungsverfahren nach einem der Ansprüche 11 bis 15, derart, dass das Volumenverhältnis zwischen anorganischen und organischen Stoffen im Bereich von 0,3 bis 2 liegt.

17. Herstellungsverfahren nach einem der Ansprüche 11 bis 16, derart, dass es sich bei dem Element X um Aluminium handelt.

18. Herstellungsverfahren nach einem der Ansprüche 11 bis 17, derart, dass das Tensid ein Copolymer mit drei Blöcken ist, wobei jeder der Blöcke aus einer Poly(alkylenoxid)-Kette besteht.

19. Herstellungsverfahren nach Anspruch 18, derart, dass das Copolymer mit drei Blöcken aus zwei Poly(ethylenoxid)-Ketten und einer Poly(propylenoxid)-Kette besteht.
